# EUROPEAN PATENT APPLICATION

(11) **EP 4 550 868 A1**
(43) Date of publication of application: **07.05.2025**
(21) Application number: 23845632.1
(22) Date of filing: 27.07.2023
(51) Int. Cl.: H04W 24/02

(54) **COMMUNICATION METHOD, APPARATUS AND SYSTEM**

(30) Priority: 29.07.2022 CN 202210904138
(71) Applicant: Huawei Technologies Co., Ltd., Shenzhen, Guangdong 518129 (CN)
(72) Inventor: PAN, Qi, Shenzhen, Guangdong 518129 (CN); LI, Yongcui, Shenzhen, Guangdong 518129 (CN); WENHAM, Steven James, Shenzhen, Guangdong 518129 (CN)
(74) Representative: Thun, Clemens
(86) International application number: PCT/CN2023/109499
(87) International publication number: WO 2024/022425

(57) **Abstract**

This application provides a communication method, apparatus, and system. The method may include: A terminal device receives satellite coverage information from a network device, where the satellite coverage information indicates time during which the terminal device is located in a coverage area of a satellite. When a coverage status of the terminal device indicated by the satellite coverage information does not match an actual satellite coverage status of the terminal device, the terminal device sends a registration request message to the network device. According to the foregoing solution, when the coverage status of the terminal device changes, the network device is enabled to update the satellite coverage information in time, so that reachability of the terminal device is not affected when the terminal device is located in the coverage area of the satellite.

## Description

This application claims priority to Chinese Patent Application No. 202210904138.9, filed with the China National Intellectual Property Administration on July 29, 2022 and entitled "COMMUNICATION METHOD, APPARATUS, AND SYSTEM", which is incorporated herein by reference in its entirety.

### TECHNICAL FIELD

This application relates to the field of communication technologies, and in particular, to a communication method, apparatus, and system.

### BACKGROUND

In consideration of economic costs, some satellites may provide discontinuous coverage. To be specific, a terminal device connected to a satellite network may enter a non-coverage area of a satellite during some time, and cannot connect to the network.

In the non-coverage area of the satellite, the terminal device is in an unreachable state. The terminal device and a network device may not initiate mutual communication within the time during which the terminal device is located in the non-coverage area of the satellite, to achieve an energy-saving effect. However, in some cases, the network device cannot determine a satellite coverage status of the terminal device in time, especially a terminal device in a moving state. Because the network device cannot obtain movement location information of the terminal device in time, and cannot update satellite coverage information of the terminal device in time, the network device cannot determine a coverage status of the terminal device. This affects communication efficiency between the network device and the terminal device, and affects user experience.

### SUMMARY

This application provides a communication method, apparatus, and system, so that a network device can sense in time that a satellite coverage status of a terminal device changes, and communication efficiency between the network device and the terminal device is improved.

According to a first aspect, a communication method is provided. The method may be performed by a terminal device, or may be performed by a component (for example, a chip or a circuit) of the terminal device. This is not limited herein. For ease of description, the following uses an example in which the method is performed by the terminal device for description.

The method includes: The terminal device receives satellite coverage information from a network device, where the satellite coverage information indicates time during which the terminal device is located in a coverage area of a satellite. When a coverage status of the terminal device indicated by the satellite coverage information does not match an actual satellite coverage status of the terminal device, the terminal device sends a registration request message to the network device.

In the foregoing solution, the terminal device obtains the satellite coverage information from the network device, and sends the registration request message to the network device when the coverage status of the terminal device indicated by the satellite coverage information does not match the actual coverage status of the terminal device. The registration request message may trigger the network device to update the satellite coverage information, or the registration request message may implicitly indicate the network device to update the satellite coverage information. According to the foregoing solution, when the coverage status of the terminal device changes, the network device can update the satellite coverage information in time, so that when the terminal device is located in the coverage area of the satellite, reachability of the terminal device is not affected. In other words, a case in which when the terminal device is located in the coverage area of the satellite, the network device cannot transmit downlink data in time because the network device does not update the satellite coverage information in time can be avoided. This improves communication efficiency and user experience. For example, the terminal device enters the coverage area of the satellite from a non-coverage area of the satellite to the coverage area of the satellite because of movement, that is, is currently in a reachable state. However, the satellite coverage information of the network device indicates that the terminal device is currently in the non-coverage area of the satellite. In other words, the network device considers that the terminal device is still currently in an unreachable state. If the network device does not update the satellite coverage information in time, the downlink data cannot be sent to the terminal device, and the communication efficiency is affected. However, according to the foregoing solution, the network device can update the satellite coverage information, so that the reachability of the terminal device is not affected, and the communication efficiency is improved.

With reference to the first aspect, in some implementations of the first aspect, the registration request message includes location information of the terminal device, and the location information is used to update the satellite coverage information.

In the foregoing solution, the terminal device may include the location information in the registration request message, so that the network device can update the satellite coverage information of the terminal device based on the location information, to avoid a case in which the network device obtains the location information of the terminal device through an additional procedure. This reduces signaling overheads and improves the communication efficiency.

With reference to the first aspect, in some implementations of the first aspect, the registration request message includes first indication information, and the first indication information indicates the network device to update the satellite coverage information.

With reference to the first aspect, in some implementations of the first aspect, the method further includes: The terminal device determines that the coverage status of the terminal device indicated by the satellite coverage information does not match the actual satellite coverage status of the terminal device. The determining method specifically includes: The terminal device determines that the satellite coverage information indicates that the terminal device is currently located in the non-coverage area of the satellite, and the terminal device is currently actually located in the coverage area of the satellite.

In the foregoing solution, when the terminal device is located in the coverage area of the satellite, but the satellite coverage information indicates that the terminal device is located in the non-coverage area of the satellite, the terminal device determines that the coverage status of the terminal device indicated by the satellite coverage information does not match the actual satellite coverage status. In this case, the terminal device sends the registration request message to the network device. In other words, the satellite coverage information originally stored by the network device indicates that the terminal device is located in the non-coverage area of the satellite. Therefore, the network device considers that the terminal device is in the unreachable state, and does not transmit the downlink data to the terminal device. However, according to the foregoing solution, the network device is enabled to update the satellite coverage information in time, so that the reachability of the terminal device located in the coverage area of the satellite is not affected, and the communication efficiency is improved.

With reference to the first aspect, in some implementations of the first aspect, the method further includes: The terminal device determines the actual satellite coverage status of the terminal device. That the terminal device determines the actual satellite coverage status of the terminal device specifically includes: The terminal device determines the actual satellite coverage status of the terminal device based on signal strength of a current cell. Alternatively, the terminal device determines an actual satellite coverage situation of the terminal device based on ephemeris information of the satellite and the location information of the terminal device.

According to the foregoing solution, the terminal device may determine the actual satellite coverage status of the terminal device, to determine whether the coverage status of the terminal device indicated by the satellite coverage information matches the actual coverage status of the terminal device.

With reference to the first aspect, in some implementations of the first aspect, the method further includes: The terminal device receives second indication information from the network device. The terminal device determines, based on the second indication information, whether the coverage status of the terminal device indicated by the satellite coverage information matches the actual satellite coverage status of the terminal device.

According to a second aspect, a communication method is provided. The method may be performed by a terminal device, or may be performed by a component (for example, a chip or a circuit) of the terminal device. This is not limited herein. For ease of description, the following uses an example in which the method is performed by the terminal device for description.

The method includes: The terminal device receives an energy-saving parameter from a network device, where the energy-saving parameter is used by the terminal device to enter an energy-saving mode. When the terminal device is located in a coverage area of a satellite at first time after the terminal device enters the energy-saving mode, the terminal device sends a registration request message to the network device.

In the foregoing solution, when the terminal device is in the coverage area of the satellite at the first time, the terminal device sends the registration request message to the network device. The registration request message is used to trigger the network device to update satellite coverage information. According to the foregoing solution, when a coverage status of the terminal device changes, the network device is enabled to update the satellite coverage information in time, so that reachability of the terminal device is not affected when the terminal device is located in the coverage area of the satellite. This improves communication efficiency.

For example, the network device indicates, by using the energy-saving parameter, the terminal device to enter the energy-saving mode at specific time (denoted as second time), and the energy-saving parameter may implicitly indicate that the network device considers that the terminal device is located in a non-coverage area of the satellite after the second time. In a case in which the terminal device finds that the terminal device is actually located in the coverage area of the satellite at the first time after the second time, the terminal device may consider that the coverage status of the satellite that is indicated by the satellite coverage information and is stored by the network device does not match an actual coverage status of the terminal device. In this case, the terminal device triggers, by using the registration request message, the network device to update the satellite coverage information, so that when the terminal device is located in the coverage area of the satellite, the reachability of the terminal device is not affected. This improves the communication efficiency.

Optionally, when the terminal device is located in the coverage area of the satellite at the first time, the terminal device may not enter the energy-saving mode based on the energy-saving parameter.

With reference to the second aspect, in some implementations of the second aspect, the registration request message includes location information of the terminal device, the location information of the terminal device is used to update the satellite coverage information, and the satellite coverage information indicates time during which the terminal device is located in the coverage area of the satellite.

In the foregoing solution, the terminal device may include the location information in the registration request message, so that the network device can update the satellite coverage information of the terminal device based on the location information, to avoid a case in which the network device obtains the location information of the terminal device through an additional procedure. This improves the communication efficiency and saves resources.

With reference to the second aspect, in some implementations of the second aspect, the registration request message further includes third indication information, and the third indication information indicates the network device to update the satellite coverage information.

With reference to the second aspect, in some implementations of the second aspect, the method further includes: The terminal device receives information indicating the first time from the network device.

With reference to the second aspect, in some implementations of the second aspect, the method further includes: The terminal device determines that the terminal device is located in the coverage area of the satellite at the first time. That the terminal device determines that the terminal device is located in the coverage area of the satellite at the first time specifically includes: The terminal device determines, based on signal strength at the first time, that the terminal device is located in the coverage area of the satellite at the first time. Alternatively, the terminal device determines, based on the location information of the terminal device and ephemeris information of the satellite, that the terminal device is located in the coverage area of the satellite at the first time.

With reference to the second aspect, in some implementations of the second aspect, the method further includes: The terminal device receives fourth indication information from the network device. The terminal device determines, based on the fourth indication information, whether the terminal device is located in the coverage area of the satellite at the first time.

With reference to the second aspect, in some implementations of the second aspect, the method further includes: When the terminal device enters the coverage area of the satellite from the non-coverage area of the satellite, the terminal device sends the registration request message to the network device.

When the terminal device enters the coverage area of the satellite from the non-coverage area of the satellite, the terminal device may send the registration request message to the network device. The registration request message is used to trigger the network device to update the satellite coverage information, so that the network device senses a change of the coverage status of the terminal device (to be specific, from non-satellite coverage to satellite coverage, in other words, from the non-coverage area of the satellite to the coverage area of the satellite), to avoid a case in which the terminal device cannot receive downlink data because the network device does not update the satellite coverage information in time when the terminal device is in the coverage area of the satellite. It may be understood that the solution may be implemented with reference to the solution provided in the second aspect, or may be independently implemented. In other words, the solution may be independently implemented without depending on the solution provided in the second aspect.

According to a third aspect, a communication method is provided. The method may be performed by a terminal device, or may be performed by a component (for example, a chip or a circuit) of the terminal device. This is not limited herein. For ease of description, the following uses an example in which the method is performed by the terminal device for description.

The method includes: When the terminal device is located in a non-coverage area of a satellite, the terminal device determines whether an available wireless access technology exists. When the available wireless access technology exists, the terminal device chooses to attach to a cell corresponding to the available wireless access technology. The terminal device sends a registration request message to a network device.

In the foregoing solution, when the terminal device is in the non-coverage area of the satellite (in other words, when a satellite access technology is unavailable) the terminal device determines whether the available wireless access technology exists, to attach to the cell corresponding to the available wireless access technology. According to the foregoing solution, the terminal device located in the non-coverage area of the satellite is enabled to access a network by using another wireless access technology, and send the registration request message to the network device. The registration request message is used to trigger the network device to update network coverage information of the terminal device, and the network coverage information indicates time during which the terminal device is located in coverage of the network. According to the foregoing solution, when the terminal device is located in the non-coverage area of the satellite, the terminal device can still communicate with the network device. This improves communication efficiency and user experience.

With reference to the third aspect, in some implementations of the third aspect, a cell corresponding to the satellite and the cell corresponding to the wireless access technology belong to different registration areas.

In the foregoing solution, because the cell corresponding to the satellite and the cell corresponding to the wireless access technology belong to different registration areas, when the terminal device attaches to the cell corresponding to the wireless access technology from the cell corresponding to the satellite, a registration procedure is triggered, so that the network device can sense a change of a coverage status of the terminal device in time, so that reachability of the terminal device is not affected.

With reference to the third aspect, in some implementations of the third aspect, the method further includes: The terminal device receives fifth indication information from the network device. That the terminal device determines whether the available wireless access technology exists when the terminal device is located in the non-coverage area of the satellite includes: When the terminal device is located in the non-coverage area of the satellite, the terminal device determines, based on the fifth indication information, whether the available wireless access technology exists.

With reference to the third aspect, in some implementations of the third aspect, the registration request message includes sixth indication information, the sixth indication information indicates the network device to update the network coverage information of the terminal device, and the network coverage information indicates the time during which the terminal device is located in the coverage area of the network.

With reference to the third aspect, in some implementations of the third aspect, the registration request message includes location information of the terminal device.

In the foregoing solution, the terminal device may include the location information in the registration request message, so that the network device can update the network coverage information of the terminal device based on the location information, to avoid a case in which the network device needs to obtain the location information of the terminal device through an additional procedure. This reduces signaling overheads and improves the communication efficiency.

According to a fourth aspect, a communication method is provided. The method may be performed by a network device, or may be performed by a component (for example, a chip or a circuit) of the network device. This is not limited herein. For ease of description, the following uses an example in which the method is performed by the network device for description.

The method includes: The network device sends satellite coverage information to a terminal device, where the satellite coverage information indicates time during which the terminal device is located in a coverage area of a satellite. The network device receives a registration request message from the terminal device, where the registration request message is triggered based on the satellite coverage information. The network device updates the satellite coverage information based on the registration request message.

In the foregoing solution, the network device sends the satellite coverage information to the terminal device, and updates the satellite coverage information after receiving the registration request message triggered by the satellite coverage information. According to the foregoing solution, the network device is enabled to update the satellite coverage information in time, so that reachability of the terminal device is not affected when the terminal device is located in the coverage area of the satellite. This improves communication efficiency.

It may be understood that, that the registration request message is triggered based on the satellite coverage information means that the terminal device sends the registration request message to the network device based on the satellite coverage information. For example, the terminal device determines whether a coverage status indicated by the satellite coverage information matches an actual satellite coverage status of the terminal device. When the coverage status indicated by the satellite coverage information does not match the actual satellite coverage status, the terminal device sends the registration request message to the network device.

According to a fifth aspect, a communication method is provided. The method may be performed by a network device, or may be performed by a component (for example, a chip or a circuit) of the network device. This is not limited herein. For ease of description, the following uses an example in which the method is performed by the network device for description.

The method includes: The network device sends an energy-saving parameter to a terminal device, where the energy-saving parameter indicates the terminal device to enter an energy-saving mode. The network device receives a registration request message from the terminal device, where the registration request message is triggered based on the energy-saving parameter. The network device updates satellite coverage information based on the registration request message.

With reference to the fourth aspect or the fifth aspect, in some implementations, the registration request message includes location information of the terminal device. That the network device updates satellite coverage information based on the registration request message includes: The network device updates the satellite coverage information based on the registration request message by using the location information of the terminal device.

In the foregoing solution, the network device may obtain the location information of the terminal device from the registration request message. The location information includes, for example, a geographical location of the terminal device and/or track information (for example, a future track of the terminal device). This can avoid a case in which the network device obtains the location information of the terminal device through another additional procedure. This reduces signaling overheads and improves communication efficiency.

With reference to the fourth aspect or the fifth aspect, in some implementations, that the network device updates satellite coverage information based on the registration request message includes: The network device updates the satellite coverage information based on that a satellite accessed by the terminal device is a satellite providing discontinuous coverage.

In the foregoing solution, when the satellite accessed by the terminal device is the satellite providing discontinuous coverage, the network device updates the satellite coverage information, rather than updating the satellite coverage information of all terminal devices. This can save resources. For example, the network device may obtain the location information of the terminal device from an access network device to update the satellite coverage information of the terminal device.

With reference to the fourth aspect or the fifth aspect, in some implementations, the registration request message includes first indication information, and the first indication information indicates the network device to update the satellite coverage information.

With reference to the fourth aspect or the fifth aspect, in some implementations, the method further includes: The network device sends second indication information to the terminal device, and the second indication information indicates the terminal device to notify the network device when a coverage status of the terminal device indicated by the satellite coverage information does not match an actual satellite coverage status of the terminal device.

According to a sixth aspect, a communication method is provided. The method may be performed by a terminal device, or may be performed by a component (for example, a chip or a circuit) of the terminal device. This is not limited herein. For ease of description, the following uses an example in which the method is performed by the terminal device for description.

The method includes: When a satellite accessed by the terminal device is a satellite providing discontinuous coverage, a network device allocates a registration area including a cell corresponding to a single wireless access technology to the terminal device. The network device sends a first message to the terminal device, where the first message includes the registration area.

In the foregoing solution, the network device allocates the registration area including the cell corresponding to the single wireless access technology to the terminal device. In this case, when the terminal device switches from a cell corresponding to a satellite access technology to a cell corresponding to another available access technology, the terminal device sends a registration request message to trigger a registration area update. After receiving the registration request message, the network device may update network coverage information of the terminal device, so that reachability of the terminal device is not affected after the terminal device is attached to the cell corresponding to the available wireless access technology.

With reference to the sixth aspect, in some implementations of the sixth aspect, before the network device allocates a registration area including a cell of a single wireless access technology to the terminal device, the method further includes: The network device receives the registration request message from the terminal device.

With reference to the sixth aspect, in some implementations of the sixth aspect, that a network device allocates a registration area including a cell of a single wireless access technology to a terminal device when a satellite accessed by the terminal device is a satellite providing discontinuous coverage includes: When the satellite accessed by the terminal device is the satellite providing discontinuous coverage, the network device allocates, based on configuration information, the registration area including the cell of the single wireless access technology to the terminal device.

With reference to the sixth aspect, in some implementations of the sixth aspect, the method further includes: The network device determines that the satellite accessed by the terminal device is the satellite providing discontinuous coverage.

With reference to the sixth aspect, in some implementations of the sixth aspect, the first message further includes seventh indication information, and the seventh indication information indicates the terminal device to determine, when the terminal device is located in a non-coverage area of the satellite, whether the available wireless access technology exists.

According to a seventh aspect, a communication method is provided. The method includes: A network device sends satellite coverage information to a terminal device, where the satellite coverage information indicates time during which the terminal device is located in a coverage area of a satellite. When a coverage status of the terminal device indicated by the satellite coverage information does not match an actual satellite coverage status of the terminal device, the terminal device sends a registration request message to the network device. The network device receives the registration request message from the terminal device. The network device updates the satellite coverage information based on the registration request message.

According to an eighth aspect, a communication method is provided. The method includes: A network device sends an energy-saving parameter to a terminal device, where the energy-saving parameter indicates the terminal device to enter an energy-saving mode. The terminal device receives the energy-saving parameter from the network device. When the terminal device is located in a coverage area of a satellite at first time after the terminal device enters the energy-saving mode, the terminal device sends a registration request message to the network device. The network device receives the registration request message from the terminal device. The network device updates the satellite coverage information based on the registration request message.

According to a ninth aspect, a communication method is provided. The method includes: When a network device determines that a satellite accessed by a terminal device is a satellite providing discontinuous coverage, the network device allocates a registration area including a cell of a single wireless access technology to the terminal device. The network device sends a first message to the terminal device, where the first message includes the registration area. The terminal device receives the first message from the network device.

According to the ninth aspect, in some implementations of the ninth aspect, the method further includes: When the terminal device is located in a non-coverage area of the satellite, the terminal device determines whether an available wireless access technology exists. When the available wireless access technology exists, the terminal device attaches to a cell corresponding to the available wireless access technology. The terminal device sends a registration request message to the network device. The network device receives the registration request message from the terminal device. The network device updates network coverage information of the terminal device based on the registration request message, where the network coverage information indicates time during which the terminal device is located in coverage of a network.

According to a tenth aspect, a communication method is provided. The method includes: A network device sends satellite coverage information to an access network device, where the satellite coverage information indicates time during which a terminal device is located in a coverage area of a satellite. The access network device receives the satellite coverage information from the network device. When a coverage status of the terminal device indicated by the satellite coverage information does not match an actual satellite coverage status of the terminal device, the access network device sends a registration request message to the network device. The network device receives the registration request message from the access network device. The access network device updates the satellite coverage information based on the registration request message.

The network device may further perform any implementation method of the fourth aspect to the sixth aspect.

According to an eleventh aspect, a communication system is provided. The system includes a network device and an access network device. The network device is configured to send satellite coverage information to the access network device, where the satellite coverage information indicates time during which a terminal device is located in a coverage area of a satellite. The access network device is configured to receive the satellite coverage information from the network device. When a coverage status of the terminal device indicated by the satellite coverage information does not match an actual satellite coverage status of the terminal device, a registration request message is sent to the network device. The network device is further configured to: receive the registration request message from the access network device; and update the satellite coverage information based on the registration request message. The network device further has a function of implementing any implementation method of the fourth aspect to the sixth aspect.

According to a twelfth aspect, a communication apparatus is provided. The apparatus may be a terminal device, or may be a chip used for a terminal device. The apparatus has a function of implementing any implementation method of the first aspect to the third aspect. The function may be implemented by hardware, or may be implemented by hardware executing corresponding software. The hardware or the software includes one or more modules corresponding to the function.

According to a thirteenth aspect, a communication apparatus is provided. The apparatus may be a network device, or may be a chip used in the network device. The apparatus has a function of implementing any implementation method of the fourth aspect to the sixth aspect. The function may be implemented by hardware, or may be implemented by hardware executing corresponding software. The hardware or the software includes one or more modules corresponding to the function.

According to a fourteenth aspect, a communication apparatus is provided. The apparatus includes: a memory, configured to store a program; and a processor, configured to execute the program stored in the memory. When the program stored in the memory is executed, the processor is configured to perform any method provided in the first aspect to the sixth aspect.

According to a fifteenth aspect, this application provides a processor, configured to perform the method provided in the foregoing aspects. In a process of performing these methods, a process of sending the foregoing information and a process of obtaining/receiving the foregoing information in the foregoing methods may be understood as a process of outputting the foregoing information by the processor and a process of receiving the foregoing input information by the processor. When outputting the information, the processor outputs the information to a transceiver, so that the transceiver transmits the information. After the foregoing information is output by the processor, other processing may be further required, and then the information arrives at the transceiver. Similarly, when the processor receives the foregoing input information, the transceiver obtains/receives the foregoing information, and inputs the information into the processor. Further, after the transceiver receives the foregoing information, the foregoing information may need to be processed in another manner, and then is input into the processor.

Based on the foregoing principle, for example, receiving a request message mentioned in the foregoing methods may be understood as receiving input information by the processor.

Unless otherwise specified, or if operations such as transmitting, sending, and obtaining/receiving related to the processor do not contradict an actual function or internal logic of the operations in related descriptions, all the operations may be more generally understood as operations such as outputting, receiving, and inputting of the processor, instead of operations of transmitting, sending, and receiving directly performed by a radio frequency circuit and an antenna.

In an implementation process, the processor may be a processor specially configured to perform these methods, or a processor, for example, a general-purpose processor, that executes computer instructions in the memory to perform these methods. The memory may be a non-transitory (non-transitory) memory, for example, a read-only memory (read-only memory, ROM). The memory and the processor may be integrated on a same chip, or may be respectively disposed on different chips. A type of the memory and a manner of disposing the memory and the processor are not limited in this embodiment of this application.

According to a sixteenth aspect, a computer-readable storage medium is provided, where the computer-readable storage medium stores program code executed by a device, and the program code includes instructions for performing any method provided in the first aspect to the sixth aspect.

According to a seventeenth aspect, a computer program product including instructions is provided. When the computer program product runs on a computer, the computer is enabled to perform any method provided in the first aspect to the sixth aspect.

According to an eighteenth aspect, a chip is provided. The chip includes a processor and a communication interface. The processor reads, through the communication interface, instructions stored in a memory, to perform any method provided in the first aspect to the sixth aspect.

Optionally, in an implementation, the chip may further include the memory, where the memory stores instructions. The processor is configured to execute the instructions stored in the memory. When the instructions are executed, the processor is configured to perform any method provided in the first aspect to the sixth aspect.

According to a nineteenth aspect, a communication system is provided. The communication system includes a terminal device configured to perform the method shown in the first aspect and a network device configured to perform the method shown in the fourth aspect.

According to a twentieth aspect, a communication system is provided. The communication system includes a terminal device configured to perform the method shown in the second aspect and a network device configured to perform the method shown in the fifth aspect.

According to a twenty-first aspect, a communication system is provided. The communication system includes a terminal device configured to perform the method shown in the third aspect and a network device configured to perform the method shown in the sixth aspect.

### BRIEF DESCRIPTION OF DRAWINGS

FIG. 1 is a schematic of a network architecture to which an embodiment of this application is applicable;
FIG. 2 is a schematic of another network architecture to which an embodiment of this application is applicable;
FIG. 3 is a schematic of another network architecture to which an embodiment of this application is applicable;
FIG. 4 is a diagram of a satellite communication scenario;
FIG. 5 is a diagram of a satellite discontinuous coverage scenario;
FIG. 6 is an example flowchart of a communication method 600 according to an embodiment of this application;
FIG. 7 is an example flowchart of another communication method 700 according to an embodiment of this application;
FIG. 8 is an example flowchart of still another communication method 800 according to an embodiment of this application;
FIG. 9 is an example flowchart of still another communication method 900 according to an embodiment of this application;
FIG. 10 is an example flowchart of still another communication method 1000 according to an embodiment of this application;
FIG. 11 is an example flowchart of still another communication method 1100 according to an embodiment of this application;
FIG. 12 is a block schematic of a communication apparatus according to an embodiment of this application;
FIG. 13 is a block schematic of a communication apparatus according to another embodiment of this application; and
FIG. 14 is a block schematic of a communication apparatus according to still another embodiment of this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. In the descriptions of this application, unless otherwise specified, "a plurality" of means two or more than two.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numerals used in this application are merely differentiated for ease of description, but are not used to limit the scope of this application. The sequence numbers of the foregoing processes do not mean execution sequences, and the execution sequences of the processes should be determined based on functions and internal logic of the processes.

In the specification, claims, and accompanying drawings of this application, the terms "first", "second", "third", "fourth", and various other ordinal number terms (if existent) are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

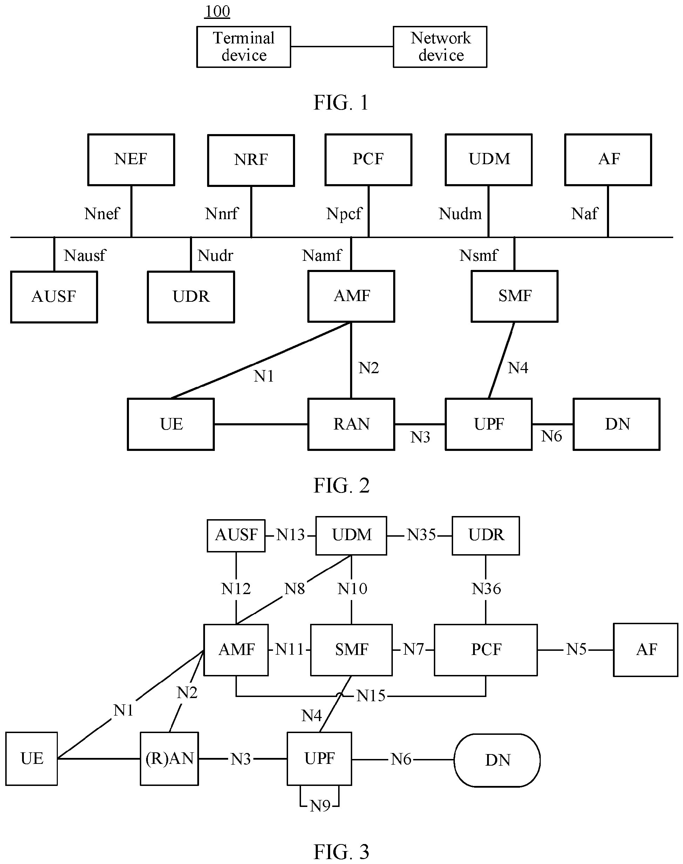

To resolve the problem mentioned in the background, as shown in FIG. 1, this application provides a communication system 100. The system 100 includes a terminal device and a network device.

In a possible example, the network device is configured to send satellite coverage information to the terminal device, where the satellite coverage information indicates time during which the terminal device is located in a coverage area of a satellite. The terminal device is configured to receive the satellite coverage information from the network device. When a coverage status of the terminal device indicated by the satellite coverage information does not match an actual satellite coverage status of the terminal device, the terminal device is further configured to send a registration request message to the network device. The network device is further configured to receive the registration request message from the terminal device, and update the satellite coverage information based on the registration request message.

For example, in the communication system provided in this embodiment of this application, the terminal device obtains the satellite coverage information from the network device, and sends the registration request message to the network device when the coverage status of the terminal device indicated by the satellite coverage information does not match the actual coverage status of the terminal device. The registration request message may trigger the network device to update the satellite coverage information. According to the foregoing solution, when the coverage status of the terminal device changes, the network device can update the satellite coverage information in time, so that when the terminal device is located in the coverage area of the satellite, reachability of the terminal device is not affected. In other words, a case in which when the terminal device is located in the coverage area of the satellite, the network device cannot transmit downlink data in time because the network device does not update the satellite coverage information can be avoided. This improves communication efficiency and user experience.

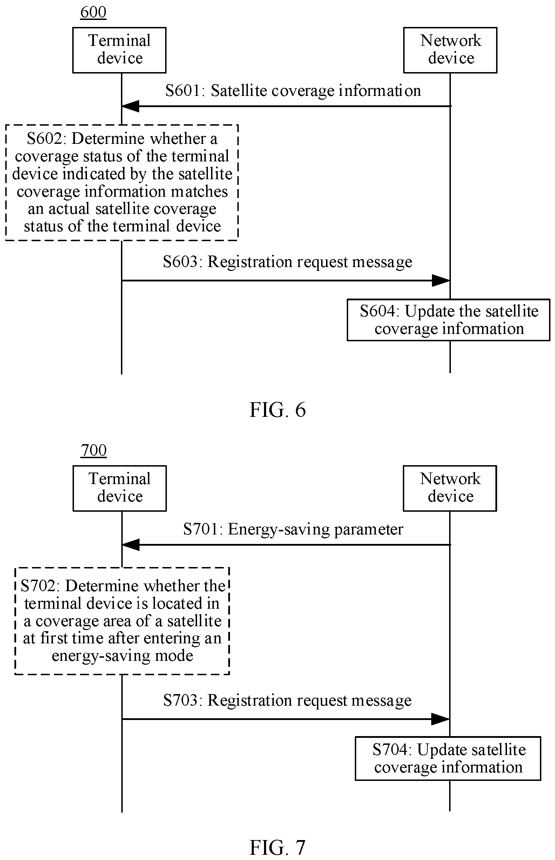

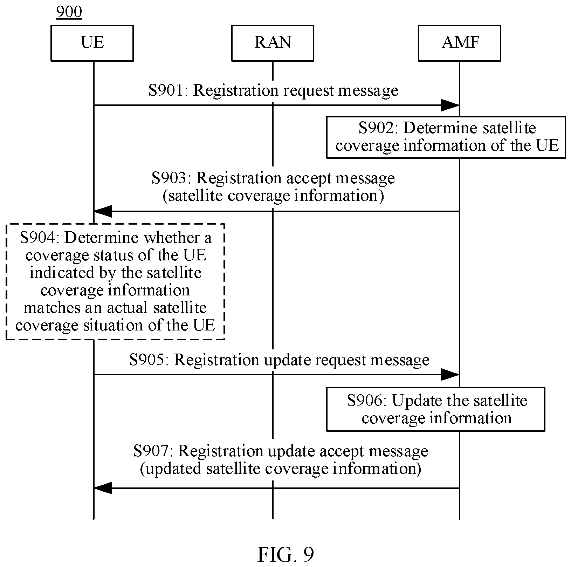

It should be understood that, for a specific interaction process between network elements in FIG. 1, refer to a procedure of any method in FIG. 6 to FIG. 8, or refer to a procedure of any method in FIG. 9 to FIG. 11. For a specific implementation solution, refer to detailed descriptions in the method 600 to the method 1100.

The communication system 100 shown in FIG. 1 may be used in a 5th generation (5th generation, 5G) network architecture shown in FIG. 2 and/or FIG. 3. In this case, a terminal device in the communication system 100 may correspond to UE in FIG. 2 or FIG. 3, and a network device in the communication system 100 may correspond to an AMF in FIG. 2 or FIG. 3. The communication system 100 shown in FIG. 1 may also be used in a 4th generation (4th generation, 4G) network architecture. In this case, the terminal device in the communication system 100 may correspond to UE in 4G, and the network device in the communication system 100 may correspond to a mobility management entity (mobility management entity, MME) in 4G. Certainly, the communication system 100 shown in FIG. 1 may also be used in a future network architecture, for example, a 6th generation (6th generation, 6G) network architecture. This is not specifically limited in this embodiment of this application.

The following uses an example to describe a 5G system to which embodiments of this application are applicable with reference to FIG. 2 and FIG. 3. It should be understood that the 5G system described in this specification is merely an example, and should not constitute any limitation on this application.

It should be further understood that some network elements in the 5G system may communicate with each other through a service-based interface or a point-to-point interface. The following separately describes a 5G system framework based on the point-to-point interface and a 5G system framework based on the service-based interface with reference to FIG. 2 and FIG. 3.

For example, FIG. 2 is a schematic of an architecture of a 5G system to which an embodiment of this application is applicable. FIG. 2 is a schematic of a 5G network architecture based on a point-to-point interface. As shown in FIG. 2, the network architecture may include but is not limited to the following network elements (or referred to as functional network elements, functional entities, nodes, devices, or the like):
a (radio) access network ((radio) access network, (R)AN) network device, an access and mobility management function (access and mobility management function, AMF) network element, a session management function (session management function, SMF) network element, a user plane function (user plane function, UPF) network element, a policy control function (policy control function, PCF) network element, a unified data management (unified data management, UDM) network element, an AF network element, a data network (data network, DN), a network slice selection function (network slice selection function, NSSF), an authentication server function (authentication server function, AUSF), unified data management (unified data management, UDM), a BSF network element, a unified data repository (unified data repository, UDR), and the like.

The following briefly describes the network elements shown in FIG. 2.
1. The user equipment (user equipment, UE) may be referred to as a terminal device (terminal device), a terminal apparatus, an access terminal, a subscriber unit, a subscriber station, a mobile station (mobile station, MS), a mobile terminal (mobile terminal, MT), a remote station, a remote terminal, a mobile device, a user terminal, a terminal, a wireless communication device, a user agent, or a user apparatus. The terminal device may be a device that provides voice/data connectivity for a user, for example, a handheld device or a vehicle-mounted device with a wireless connection function. Currently, some examples of the terminal may be a mobile phone (mobile phone), a tablet computer (pad), a computer (for example, a laptop or a palmtop computer) with a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a vehicle-mounted device, a wearable device, a terminal device in a 5G network, or a terminal device in a future evolved public land mobile network (public land mobile network, PLMN).

In addition, the terminal device may alternatively be a terminal device in an internet of things (Internet of things, IoT) system. The IoT is an important part of future information technology development. A main technical feature of the IoT is to connect things to a network by using a communication technology, to implement a smart network for human-machine interconnection and thing-thing interconnection. In an IoT technology, massive connections, deep coverage, and power saving of a terminal may be implemented by using, for example, a narrowband (narrowband, NB) technology.

In addition, the terminal device may further include a smart printer, a train detector, and the like. Main functions include collecting data (some terminal devices), receiving control information and downlink data of a network device, sending an electromagnetic wave, and transmitting uplink data to the network device.

It should be understood that the user equipment may be any device that can access a network. The terminal device may communicate with the access network device by using an air interface technology.

Optionally, the user equipment may be used as a base station. For example, the user equipment may be used as a scheduling entity that provides a sidelink signal between user equipment in V2X, D2D, or the like. For example, a cellular phone and a car communicate with each other by using a sidelink signal. The cellular phone communicates with a smart household device without relaying a communication signal through a base station.

2. The (radio) access network ((radio) access network, (R)AN) device is configured to provide a network access function for authorized user equipment in a specific area, and is capable of using transmission tunnels of different quality of service based on a level of the user equipment, a service requirement, and the like.

The (R)AN can manage wireless resources and provide an access service for the user equipment, to forward a control signal and user equipment data between the user equipment and a core network. The (R)AN may also be understood as a base station in a conventional network.

For example, the access network device in embodiments of this application may be any communication device with a wireless transceiver function for communicating with the user equipment. The access network device includes but is not limited to an evolved NodeB (evolved NodeB, eNB), a gNB or a transmission point (TRP or TP) in a 5G system, for example, NR, or one antenna panel or a group of antenna panels (including a plurality of antenna panels) of a base station in the 5G system, or may be a network node that forms a gNB or a transmission point, for example, a baseband unit (BBU) or a distributed unit (distributed unit, DU).

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the access network device may be a device including one or more of a CU node, a DU node, or an AAU node. In addition, the CU may be classified as an access network device in an access network (radio access network, RAN), or the CU may be classified as an access network device in the core network (core network, CN). This is not limited in this application.

In a satellite communication scenario, a radio access network device may also be referred to as a wireless satellite access network station (or a wireless satellite access network device or a wireless satellite access network), a satellite access network station (or a satellite access network device or a satellite access network), or a satellite network station (or referred to as a satellite network device or a satellite network). This is not limited in this embodiment of this application. The satellite access network may be deployed in a plurality of manners. For example, a same PLMN has both a terrestrial 3GPP access network and a satellite 3GPP access network, and the two access networks respectively have independent interfaces with a core network. For another example, different core networks share a same satellite access network, and the shared satellite access network includes an available PLMN in broadcast system information. For another example, the terrestrial access network and the satellite access network are independent. To be specific, the terrestrial access network and the satellite access network correspond to independent PLMNs. For another example, a satellite in the sky is only responsible for signal transmission, and does not have a function of accessing a network. In this scenario, satellite access may also be referred to as satellite backhaul. In the foregoing non-satellite backhaul scenario, the satellite may include all or some functions of accessing a network. This is not limited in this application. When all functions of the base station are integrated in the satellite, the satellite access network device may be understood as a device that is on the satellite and has some functions of the base station, and all related signaling and data processing of the access network are performed on the satellite. When some functions of the base station are integrated in the satellite, and some functions are located on the ground, the satellite access network device may be understood as a device that is on the satellite and has some functions of the base station and a device that is on the ground and has some functions of the base station. Related signaling and data processing of the access network are partially performed on the satellite and partially performed on the ground. During the satellite backhaul, the satellite access network device may be understood as a base station on the ground, related signaling and data processing of the access network are all performed on the ground, and the satellite transparently transmits signaling and data between a terminal device and the satellite access network.

3. The user plane function (user plane function, UPF) network element is used for packet routing and forwarding, quality of service (quality of service, QoS) handling for user plane data, and the like.

In a future communication system, a user plane network element may still be the UPF network element, or may have another name. This is not limited in this application.

4. The access and mobility management function (access and mobility management function, AMF) network element: The access and mobility management function network element is mainly configured to: perform mobility management, access management, and the like, and may be configured to implement another function in an MME function other than session management, for example, an access authorization/authentication function.

In a future communication system, an access and mobility management device may still be the AMF, or may have another name. This is not limited in this application.

5. The session management function (session management function, SMF) network element is mainly configured to: manage a session, allocate and manage a network interconnect protocol (internet protocol, IP) address of user equipment, select a termination point that can manage a user plane function, policy control, and a charging function interface, notify downlink data, and the like.

In a future communication system, a session management network element may still be the SMF network element, or may have another name. This is not limited in this application.

6. The policy control function (policy control function, PCF) network element is a unified policy framework for guiding network behavior, and provides policy rule information and the like for a control plane function network element (such as an AMF or an SMF).

In a future communication system, a policy control network element may still be the PCF network element, or may have another name. This is not limited in this application.

7. The application function (application function, AF) is configured to: perform application-affected data routing, wirelessly access a network exposure function network element, and interact with a policy framework for policy control, and the like.

In a future communication system, an application network element may still be the AF network element, or may have another name. This is not limited in this application.

8. The unified data management (unified data management, UDM) network element is configured to perform UE identifier processing, access authentication, registration, mobility management, and the like.

In a future communication system, a unified data management network element may still be the UDM network element, or may have another name. This is not limited in this application.

9. The authentication server function (authentication server function, AUSF) network element is configured to provide an authentication service, generate a key to implement two-way authentication for user equipment, and support a unified authentication framework.

In a future communication system, an authentication server function network element may still be the AUSF network element, or may have another name. This is not limited in this application.

10. The network data analysis function (network data analytics function, NWDAF) network element is configured to: identify a network slice instance, and load load-level information of the network slice instance. The network data analysis function enables NF consumers to subscribe to or unsubscribe from periodic notifications and notify the consumers when a threshold is exceeded.

In a future communication system, a network data analysis function network element may still be the NWDAF network element, or may have another name. This is not limited in this application.

11. The data network (data network, DN): The DN is a network located outside an operator network. The operator network may access a plurality of DNs, and a plurality of services may be deployed on the DN, and a service such as data and/or voice may be provided for a terminal device. For example, the DN is a private network of a smart factory, a sensor installed in a workshop of the smart factory may be a terminal device, a control server of the sensor is deployed in the DN, and the control server may serve the sensor. The sensor may communicate with the control server, to obtain instructions of the control server, transmit collected sensor data to the control server according to the instructions, and the like. For another example, the DN is an internal office network of a company, a mobile phone or a computer of an employee of the company may be a terminal device, and the mobile phone or the computer of the employee may access information, data resources, and the like in the internal office network of the company.

In FIG. 2, Nausf, Nnef, Npcf, Nudm, Naf, Namf, Nsmf, N1, N2, N3, N4, and N6 are interface sequence numbers. For meanings of the interface sequence numbers, refer to meanings defined in a 3GPP standard protocol. This is not limited herein.

In the network architecture shown in FIG. 2, the network elements may communicate with each other through an interface shown in the figure. As shown in the figure, the UE and the AMF may interact with each other through an N1 interface, and an interaction message may be referred to as, for example, an N1 message (N1 Message). The RAN and the AMF may interact with each other through an N2 interface, and the N2 interface may be for sending a non-access stratum (non-access stratum, NAS) message and the like. The RAN and the UPF may interact with each other through an N3 interface, and the N3 interface may be for transmitting user plane data and the like. The SMF and the UPF may interact with each other through an N4 interface, and the N4 interface may be for transmitting information such as tunnel identifier information of an N3 connection, data buffering indication information, and a downlink data notification message. The UPF and the DN may interact with each other through an N6 interface, and the N6 interface may be for transmitting user plane data and the like. A relationship between another interface and each network element is shown in FIG. 2. For brevity, details are not described herein.

FIG. 3 is a schematic of a 5G network architecture based on a point-to-point interface. For descriptions of functions of network elements in FIG. 3, refer to descriptions of functions of corresponding network elements in FIG. 2. Details are not described again. A main difference between FIG. 3 and FIG. 2 lies in that interfaces between the network elements in FIG. 3 are point-to-point interfaces rather than service-oriented interfaces.

In the architecture shown in FIG. 3, names and functions of the interfaces between the network elements are as follows:
(1) N7 is an interface between a PCF and an SMF, configured to deliver a protocol data unit (protocol data unit, PDU) session granularity and a service data flow granularity control policy.
(2) N15 is an interface between a PCF and an AMF, configured to deliver a UE policy and an access control policy.
(3) N5 is an interface between an AF and a PCF, configured to deliver application service requests and report network events.
(4) N4 is an interface between an SMF and a UPF, configured to transmit information between a control plane and a user plane, including delivery of a forwarding rule, a QoS control rule, a traffic statistics rule, and the like that are from the control plane to the user plane, and information report of the user plane.
(5) N11 is an interface between an SMF and an AMF, configured to: transfer PDU session tunnel information between a RAN and a UPF, transfer a control message sent to UE, transfer radio resource control information sent to the RAN, and the like.
(6) N2 is an interface between an AMF and a RAN, configured to transfer radio bearer control information from a core network side to the RAN, and the like.
(7) N1 is an interface between an AMF and UE, is access-irrelevant, and is configured to transfer a QoS control rule and the like to the UE.
(8) N8 is an interface between an AMF and a UDM, used by the AMF to obtain access and mobility management-related subscription data and authentication data from the UDM, and used by the AMF to register current mobility management-related information of UE to the UDM.
(9) N10 is an interface between an SMF and a UDM, used by the SMF to obtain session management-related subscription data from the UDM, and used by the SMF to register current session-related information of UE to the UDM.
(10) N35 is an interface between a UDM and a UDR, used by the UDM to obtain user subscription data from the UDR.
(11) N36 is an interface between a PCF and a UDR, used by the PCF to obtain policy-related subscription data and application data-related information from the UDR.
(12) N12 is an interface between an AMF and an AUSF, and is used by the AMF to initiate an authentication procedure to the AUSF, where an SUCI may be carried as a subscription identifier.
(13) N13 is an interface between a UDM and an AUSF, and is used by the AUSF to obtain a user authentication vector from the UDM, to perform an authentication procedure.

It should be understood that the foregoing names are defined only for ease of distinguishing between different functions, and should not constitute any limitation on this application. This application does not exclude a possibility that another name is used in the 5G network and another future network. For example, in a 6G network, some or all of the foregoing network elements may still use terms in 5G, or may use other names. Names of the interfaces between the network elements in FIG. 2 are merely examples. In specific implementation, the names of the interfaces may be other names. This is not specifically limited in this application. In addition, names of messages (or signaling) transmitted between the foregoing network elements are merely examples, and do not constitute any limitation on functions of the messages.

It may be understood that these network elements or functions may be network elements in a hardware device, may be software functions running on dedicated hardware, or may be virtualized functions instantiated on a platform (for example, a cloud platform). For ease of description, in this application, an example in which the network device is an access and mobility management function AMF and the base station is a radio access network RAN is used for description below.

It should be understood that the foregoing network architecture applied to embodiments of this application is merely an example for description, and the network architecture applicable to embodiments of this application is not limited thereto. Any network architecture that can implement the functions of the foregoing network elements is applicable to embodiments of this application.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The aspects or features of embodiments of this application may be implemented as a method, or implemented by using an apparatus or a product of standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk or a magnetic tape), an optical disc (for example, a compact disc (compact disc, CD), a digital versatile disc (digital versatile disc, DVD)), a smart card and a flash memory component (for example, erasable programmable read-only memory (erasable programmable read-only memory, EPROM), a card, a stick, or a key drive). In addition, various storage media described in this specification may represent one or more devices and/or other machine-readable media that are configured to store information. The term "machine readable media" may include but is not limited to a radio channel, and various other media that can store, contain and/or carry instructions and/or data.

To facilitate understanding of the technical solutions in embodiments of this application, before the solutions in embodiments of this application are described based on a 5G architecture, some terms or concepts in 5G that may be used in embodiments of this application, and network elements that may be used in this application but are not shown in the foregoing network architecture are first briefly described.

### 1. Satellite communication

A satellite communication technology is a technology by which a wireless communication device on the ground accesses a network via a satellite, or is a technology by which wireless communication devices on the ground communicate with each other by using a satellite as a relay. In comparison with a conventional mobile communication system, the satellite communication has advantages, for example, has wider coverage, and can overcome natural geographical obstacles such as oceans, deserts, and mountains.

Based on a communication system architecture shown in FIG. 2 or FIG. 3, the satellite communication and a 5G communication system (the 5th-generation mobile communications system, 5GS) may be integrated. Currently, there may be two scenarios for integration of the satellite communication and the 5GS. In a first scenario, a satellite is used for 3GPP access, and UE accesses a 5G core (5G core, 5GC) network in the 5GS via the satellite. In a second scenario, a satellite link is used as a backhaul link, and the UE communicates with the 5GC in the 5GS through the backhaul link (for example, the backhaul link provides a bearer for N3 or N9).

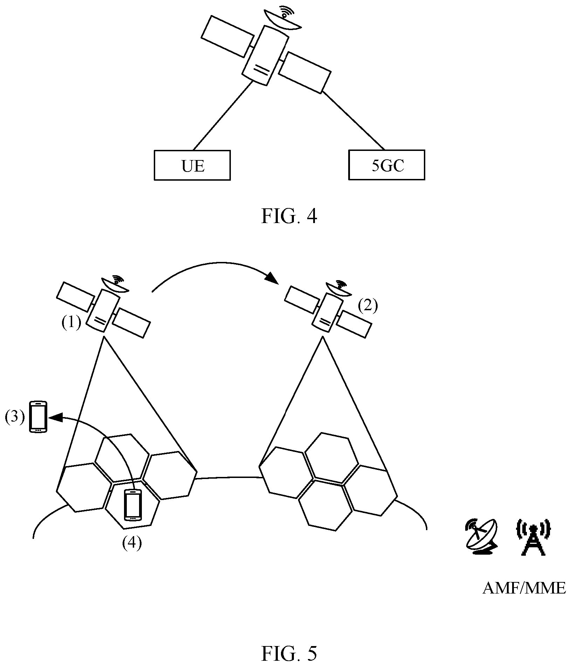

FIG. 4 is a diagram of a scenario of the integration of the satellite communication and the 5GS. In a manner, the satellite may be used as a regeneration mode to provide a signal processing function, or the satellite serves as a function of an access network device. In this case, the UE is directly connected to the 5GC via the satellite. In another manner, the satellite may be used as a transparent mode to only forward a signal. In this case, after connecting to the satellite, the UE further needs to be connected to the 5GC via a RAN (not shown in the figure).

It should be noted that FIG. 4 shows only one satellite. In an actual communication scenario, there may be a plurality of satellites, and types of the plurality of satellites may be the same or may be different. A wireless link exists between different satellites, so that signaling exchange and user data transmission between the access network devices can be completed.

Different types of satellites may have different coverage areas, movement features, propagation delays, and jitter due to different orbit heights. For example, the satellite may be classified into a geostationary equatorial orbit (geostationary equatorial orbit, GEO) satellite, a low earth orbit (low earth orbit, LEO) satellite polar orbit constellation, a mid earth orbit (mid earth orbit, MEO) satellite, and other satellites (Other SATs) by orbit type.

### 2. Ephemeris information

The ephemeris information is some information related to a satellite constellation, and mainly indicates information such as a height, a speed, a direction, a movement track, or coverage of satellite movement, and corresponding different time. A network side can determine a location of a satellite at a specific time point and a coverage range of the satellite based on the ephemeris information.

### 3. Satellite discontinuous coverage

Some satellites may provide discontinuous coverage. In other words, a coverage area of the satellite is discontinuous, or the satellite has a coverage area and a non-coverage area. The coverage area herein is an area that can be covered by a network (or a signal) of the satellite, and the non-coverage area is an area that cannot be covered by the network of the satellite. For example, in a diagram of satellite coverage shown in FIG. 5, a hexagon area in the figure is the coverage area of the satellite, and an area outside the hexagon in the figure is the non-coverage area of the satellite.

In a scenario of the satellite discontinuous coverage, UE connected to the satellite switches between the coverage area and the non-coverage area. For example, if the UE is stationary at a location (4), and the satellite moves from a location (1) to a location (2), the UE enters the non-coverage area from the coverage area. For another example, the UE moves from the location (4) to a location (3), and therefore the UE enters the non-coverage area from the coverage area. It may be understood that the UE may switch between the coverage area and the non-coverage area because of movement of the UE and the satellite.

In this embodiment of this application, time during which the UE is located in the coverage area indicates time from a current moment to a moment at which the UE leaves the coverage area, that is, time during which the UE can be further covered, or indicates time from the current moment to a moment at which the UE enters the non-coverage area, that is, duration before the UE leaves the coverage area. The time during which the UE is located in the non-coverage area indicates time from entering the non-coverage area by the UE to leaving the non-coverage area by the UE, or indicates time from leaving the coverage area by the UE to re-entering the coverage area by the UE at a next time.

FIG. 6 is an example flowchart of a method 600 according to an embodiment of this application. In the method 600, when a terminal device finds that a coverage status of the terminal device indicated by satellite coverage information provided by a network device does not match an actual satellite coverage status of the terminal device, the terminal device initiates a registration procedure to the network device, so that the network device updates the satellite coverage information.

The following describes the method 600 by using an example with reference to each step in FIG. 6.

S601: The network device sends the satellite coverage information to the terminal device. Correspondingly, the terminal device receives the satellite coverage information from the network device.

For example, when determining that a satellite accessed by the terminal device is a satellite providing discontinuous coverage, the network device obtains the satellite coverage information of the terminal device. The satellite coverage information indicates time during which the terminal device is located in a coverage area of the satellite, or the satellite coverage information indicates time during which the terminal device is located in a non-coverage area of the satellite. In other words, the network device and the terminal device may determine, based on the satellite coverage information, a time period in which the terminal device is located in the coverage area of the satellite and a time period in which the terminal device is located in the non-coverage area of the satellite. The satellite coverage information may be determined by the network device based on ephemeris information of the satellite and location information of the terminal device, or may be obtained by the network device from another network element. This is not limited in this application. Alternatively, in another possible implementation, the network device may not send the satellite coverage information to the terminal device, but send indication information to the terminal device. The indication information indicates the terminal device to generate the satellite coverage information of the terminal device side based on the ephemeris information of the satellite and the location information of the terminal device. The terminal device may determine the satellite coverage information based on the indication information. It may be understood that the location information of the terminal device may be current location information of the terminal device.

The network device may obtain the ephemeris information of the satellite from an access network device, or may obtain the ephemeris information of the satellite from another network element or a third-party entity. This is not limited herein.

It may be understood that the satellite in this embodiment of this application may be a satellite network, where the satellite network includes one or more satellites, and the satellite network is configured to provide an access service for the terminal device. Therefore, the "satellite" in this embodiment of this application may be replaced with the "satellite network".

Then, the network device sends the satellite coverage information to the terminal device.

In a possible implementation, the network device sends the satellite coverage information to the terminal device via the access network device.

In an implementation, the network device may send the satellite coverage information to the terminal device in the registration procedure of the terminal device. For example, after the network device receives a registration request message from the terminal device, when determining that the satellite accessed by the terminal device is the satellite providing discontinuous coverage, the network device generates the satellite coverage information of the terminal device, and then sends a registration accept message to the terminal device, where the satellite coverage information is included in the registration accept message.

In another implementation, the network device may generate the satellite coverage information based on configuration information, and send the satellite coverage information to the terminal device by using a non-access stratum message. In other words, the network device actively sends the satellite coverage information to the terminal device by using the non-access stratum message, for example, sends the satellite coverage information to the terminal device through a terminal device configuration update (UE Configuration Update, UCU) procedure in 5G. In this implementation, a moment at which the network device sends the satellite coverage information to the terminal device is not limited in this application.

Optionally, the network device may further send second indication information to the terminal device, and the second indication information indicates to notify the network device (or trigger the registration procedure) when the coverage status of the terminal device indicated by the satellite coverage information does not match the actual satellite coverage status of the terminal device, or the second indication information indicates the terminal device to determine whether the coverage status of the terminal device indicated by the satellite coverage information matches the actual satellite coverage status of the terminal device. The satellite coverage status of the terminal device includes that the terminal device is located in the coverage area of the satellite, and that the terminal device is located in the non-coverage area of the satellite. It may be understood that "the terminal device is located in the non-coverage area of the satellite" in this embodiment of this application may be replaced with "the terminal device is not located in the coverage area of the satellite".

It may be understood that, in this embodiment of this application, communication between the network device and the terminal device may be direct communication between the network device and the terminal device, or may be indirect communication via another network element (for example, the access network device). For example, that the network device sends the satellite coverage information to the terminal device may mean that the network device sends the satellite coverage information to the terminal device via the access network device. Similar parts are not described in the following.

Optionally, the network device that sends the satellite coverage information to the terminal device may be different from the network device to which the terminal device initiates a registration request procedure.

Optionally, in S602, the terminal device determines whether the coverage status of the terminal device indicated by the satellite coverage information matches the actual satellite coverage status of the terminal device.

For example, after receiving the coverage information from the network device, the terminal device determines, based on the configuration information or the second indication information from the network device, whether the coverage status of the terminal device indicated by the satellite coverage information matches the actual satellite coverage status of the terminal device.

The following describes, by using examples, two possible implementations in which the terminal device determines whether the coverage status of the terminal device indicated by the satellite coverage information matches the actual satellite coverage status of the terminal device.

In an implementation, that the terminal device determines whether the coverage status of the terminal device indicated by the satellite coverage information matches the actual satellite coverage status of the terminal device means that the terminal device determines whether a coverage status of the terminal device at specific time (which may be a moment or a time window) indicated by the satellite coverage information matches an actual coverage status of the terminal device at the time. For example, in an implementation, the terminal device determines whether a coverage status of the terminal device at a current moment indicated by the satellite coverage information matches an actual satellite coverage status of the terminal device at the current moment. The following describes this implementation by using an example.

First, the terminal device determines the actual satellite coverage status at the current moment. For example, the terminal device determines the actual satellite coverage status of the terminal device based on signal strength of a current cell. Specifically, when the signal strength of the current cell of the terminal device is less than a specified threshold, the terminal device determines that the terminal device is currently actually located in the non-coverage area of the satellite. In other words, the terminal device is currently actually not located in the coverage area of the satellite. When the signal strength of the current cell of the terminal device is greater than or equal to the specified threshold, the terminal device determines that the terminal device is currently actually located in the coverage area of the satellite. For another example, the terminal device determines, based on the ephemeris information of the satellite and the current location information of the terminal device, the actual satellite coverage status of the terminal device at the current moment. The terminal device may obtain the ephemeris information of the satellite from a broadcast message of the access network device.

Then, the terminal device determines whether the current actual satellite coverage status of the terminal device matches the coverage status of the terminal device at the current moment indicated by the satellite coverage information. For example, when the terminal device is currently actually located in the coverage area of the satellite, and the satellite coverage information indicates that the terminal device is currently located in the non-coverage area of the satellite, the terminal device determines that the current actual satellite coverage status does not match the coverage status of the terminal device indicated by the satellite coverage information. For another example, when the terminal device is currently actually located in the coverage area of the satellite, and the satellite coverage information indicates that the terminal device is currently located in the coverage area of the satellite, the terminal device determines the current actual satellite coverage status matches the coverage status of the terminal device indicated by the satellite coverage information. For another example, when the terminal device is currently actually located in the non-coverage area of the satellite, and the satellite coverage information indicates that the terminal device is currently located in the non-coverage area of the satellite, the terminal device determines that the current actual satellite coverage status does not match the coverage status of the terminal device indicated by the satellite coverage information.

Alternatively, in another implementation, the terminal device determines whether a coverage status of the terminal device indicated by the satellite coverage information at a future moment matches an actual coverage status of the terminal device at the moment. For example, the terminal device finds that the signal strength of the current cell is less than the specified threshold, but the satellite coverage information indicates that the terminal device is in the coverage area of the satellite within next one hour. In this case, the terminal device determines that the coverage status of the terminal device at the future moment indicated by the satellite coverage information does not match the actual coverage status of the terminal device at the moment. Specifically, the terminal device may estimate the coverage status at the future moment based on satellite signal strength within a current period of time. For example, the terminal device estimates the coverage status at the future moment based on a change of the satellite signal strength within 10 minutes. For another example, the terminal device determines, based on the ephemeris information of the satellite and a geographical location or future track information, that the terminal device is to enter the non-coverage area of the satellite from the coverage area of the satellite after 10 minutes. However, the satellite coverage information indicates that the terminal device is in the coverage area of the satellite within next 30 minutes. In this case, the terminal device determines that the coverage status of the terminal device indicated by the satellite coverage information at the future moment does not match the actual coverage status of the terminal device at the moment.

It may be understood that a moment at which the terminal device performs S602 and a quantity of times for which the terminal device performs S602 are not limited in this embodiment of this application. For example, after receiving the satellite coverage information from the network device, the terminal device may periodically perform S602 at a preset time interval.

S603: The terminal device sends the registration request message to the network device. Correspondingly, the network device receives the registration request message from the terminal device.

For example, when the coverage status of the terminal device indicated by the satellite coverage information does not match the actual satellite coverage status of the terminal device, the terminal device sends the registration request message to the network device. The registration request message is used to trigger the network device to update the satellite coverage information of the terminal device. In a possible implementation, the terminal device sends the registration request message to the network device via the access network device.

It may be understood that the network devices corresponding to step S603 and step S601 may be a same network device, or may not be a same network device. In other words, after receiving the satellite coverage information from one network device in S601, the terminal device may send the registration request message to another network device in S603. For convenience, in this embodiment of this application, an example in which the network devices corresponding to S603 and S601 are the same network device is used for description.

During actual implementation, if the network device sending the satellite coverage information and the network device receiving the registration request message are not the same network device, the network device sending the satellite coverage information and the network device receiving the registration request message may be network devices of a same type, or may be network devices of different types.

It may be understood that the registration request message may be a registration update request message or a mobility registration update request message in 5G, or may be a tracking area update request message in 4G, or may be another message in a future network system. Correspondingly, a registration procedure corresponding to the registration request message may be a registration procedure in 5G, a tracking area update procedure in 5G, or another procedure in the future network system. This is not limited in this application.

Optionally, the registration request message may include the location information of the terminal device. The location information is used by the network device to update the satellite coverage information, or the location information is used by the network device to track a location of the terminal device. A specific form of the location information is not limited in this embodiment of this application. In an example, the location information includes information about a current location of the terminal device and/or a future moving track.

Optionally, the registration request message may further include first indication information, and the first indication information indicates the network device to update the satellite coverage information. In other words, the terminal device may implicitly indicate, by using the registration request message, the network device to update the satellite coverage information. To be specific, when determining that the satellite accessed by the terminal device is the satellite providing discontinuous coverage, the network device updates the satellite coverage information based on the registration request message. Alternatively, the terminal device may include the explicit first indication information in the registration request message to indicate the network device to update the satellite coverage information. Alternatively, the first indication information indicates that the coverage status of the terminal device indicated by the satellite coverage information does not match the actual satellite coverage status of the terminal device. It may be understood that the first indication information may be the location information of the terminal device. In other words, the first indication information and the location information of the terminal device may be a same piece of information, or the terminal device may include the location information of the terminal device in the registration request message to indicate the network device to update the satellite coverage information of the terminal device.

S604: The network device updates the satellite coverage information.

For example, after receiving the registration request message from the terminal device, the network device updates the satellite coverage information based on the registration request message, the first indication information included in the registration request message, or the location information of the terminal device included in the registration request message.

Specifically, the network device obtains the location information of the terminal device, and then updates the satellite coverage information based on the location information. The network device may obtain the location information of the terminal device from the registration request message, or the network device triggers a terminal device location reporting procedure, so that the terminal device reports the location information of the terminal device to the network device, or the network device obtains the location information of the terminal device from the access network device side. In addition, that the network device updates the satellite coverage information based on the location information means that the network device re-determines the satellite coverage information based on the latest obtained location information of the terminal device and the ephemeris information of the satellite. Optionally, the network device may delete old satellite coverage information. Optionally, the network device herein and the network device in step S601 may be different network entities.

In the foregoing solution, the network device provides the satellite coverage information for the terminal device, so that when finding that the coverage status of the terminal device indicated by the satellite coverage information does not match the actual satellite coverage status of the terminal device, the terminal device initiates the registration procedure. The network device may update the satellite coverage information in the registration procedure. According to the foregoing solution, the network device can sense a change of the coverage status of the terminal device in time. For example, the terminal device moves from the coverage area of the satellite to the non-coverage area of the satellite because of movement. If the satellite coverage information indicates that the terminal device is still currently in the non-coverage area of the satellite, the terminal device initiates the registration procedure, so that the network device updates the satellite coverage information. This avoids a case in which the terminal device is in the coverage area of the satellite but cannot obtain downlink data in time. In other words, the network device can sense the change of the coverage status of the terminal device in time. This ensures that reachability of the terminal device is not affected, and can improve communication efficiency. In another aspect, the network device can sense the change of the coverage status of the terminal device without frequently obtaining the location information of the terminal device. This saves resources.

FIG. 7 is an example flowchart of a method 700 according to an embodiment of this application. In the method 700, when a terminal device finds that the terminal device is still in a coverage area of a satellite at a moment or a time window after time at which the terminal device is to enter an energy-saving mode, the terminal device initiates a registration procedure to a network device, so that the network device updates satellite coverage information.

The following describes the method 700 by using an example with reference to each step in FIG. 7.

S701: The network device sends an energy-saving parameter to the terminal device. Correspondingly, the terminal device receives the energy-saving parameter from the network device.

For example, when determining that the satellite accessed by the terminal device is a satellite providing discontinuous coverage, the network device determines the satellite coverage information based on ephemeris information of the satellite and location information of the terminal device. For a specific process and descriptions of the satellite coverage information, refer to descriptions of S601 in the method 600. Details are not described herein again.

Further, the network device determines the energy-saving parameter based on the satellite coverage information, where the energy-saving parameter is used by the terminal device to enter the energy-saving mode. Specifically, the energy-saving parameter is used by the terminal device to enter the energy-saving mode when the terminal device enters a non-coverage area of the satellite. That the terminal device enters the energy-saving mode may be understood as that the terminal device enters a sleep state, and the terminal device in the energy-saving mode does not communicate with the network device. The network device enables the terminal device located in the non-coverage area of the satellite to enter the energy-saving mode, to achieve an energy-saving effect. For example, the energy-saving parameter may include a periodic registration timer (periodic registration timer) parameter, active time (active time), an extended discontinuous reception (extended discontinuous reception, eDRX) parameter, and the like.

Then, the network device sends the energy-saving parameter to the terminal device. In a possible implementation, the network device sends the energy-saving parameter to the terminal device via an access network device.

In an implementation, the network device may send the energy-saving parameter to the terminal device in the registration procedure of the terminal device. For example, after the network device receives a registration request message from the terminal device, when determining that the satellite accessed by the terminal device is the satellite providing discontinuous coverage, the network device generates the satellite coverage information of the terminal device, determines the energy-saving parameter based on the satellite coverage information, sends a registration response message to the terminal device, where the energy-saving parameter is included in the registration response message. Alternatively, the network device may send the energy-saving parameter to the terminal device by using a non-access stratum message in another procedure. This is not limited in this application.

Optionally, the network device further sends, to the terminal device, information indicating first time, where the first time is a moment or a time window after the terminal device enters the energy-saving mode.

Optionally, the network device may further send fourth indication information to the terminal device. The fourth indication information indicates the terminal device to determine whether the terminal device is located in the coverage area of the satellite at the first time, or the fourth indication information indicates the terminal device to initiate the registration procedure when the terminal device is located in the coverage area of the satellite at the first time, or the fourth indication information indicates that the energy-saving parameter is determined based on satellite discontinuous coverage or is caused by the satellite discontinuous coverage. In other words, the fourth indication information may implicitly indicate the terminal device to determine whether the terminal device is in the coverage area of the satellite at the first time, and trigger the registration procedure when the terminal device is in the coverage area of the satellite at the first time.

S702: The terminal device determines whether the terminal device is located in the coverage area of the satellite at the first time after entering the energy-saving mode.

For example, after receiving the energy-saving parameter from the network device, the terminal device determines, based on configuration information or the fourth indication information from the network device, whether the terminal device is located in the coverage area of the satellite at the first time.

A moment at which the terminal device performs S702 is not limited in this embodiment of this application. In a possible implementation, after receiving the energy-saving parameter from the network device, the terminal device determines whether the terminal device is located in the coverage area of the satellite at the first time. In another implementation, before entering the energy-saving mode (for example, five seconds before the terminal device enters the energy-saving mode), the terminal device determines whether the terminal device is located in the coverage area of the satellite at the first time. In another possible implementation, after entering the energy-saving mode (for example, the terminal device is at the first time), the terminal device determines whether the terminal device is located in the coverage area of the satellite at the first time.

The terminal device may determine, based on signal strength of a current cell, whether the terminal device is located in the coverage area of the satellite at the first time. For example, before the terminal device enters the energy-saving mode, when the signal strength of the current cell is greater than a specified threshold, the terminal device predicts that the terminal device is located in the coverage area of the satellite at the first time. Alternatively, the terminal device determines or predicts, based on the location information and the ephemeris information, whether the terminal device is located in the coverage area of the satellite at the first time. The location information includes a geographical location and/or a movement track of the terminal device. This is not limited in this application.

S703: The terminal device sends the registration request message to the network device. Correspondingly, the network device receives the registration request message from the terminal device.

For example, when the terminal device determines that after entering the energy-saving mode, the terminal device is still in the coverage area of the satellite at the first time, the terminal device sends the registration request message to the network device. The registration request message is used to trigger the network device to update the satellite coverage information of the terminal device. In a possible implementation, the terminal device sends the registration request message to the network device via the access network device.

Optionally, the registration request message may include the location information of the terminal device. The location information is used by the network device to update the satellite coverage information, or the location information is used by the network device to track a location of the terminal device. For example, the location information may include a current geographical location and/or a future movement track of the terminal device.

Optionally, the registration request message may further include third indication information. The third indication information indicates the network device to update the satellite coverage information, or the third indication information indicates that the terminal device is located in the coverage area of the satellite at the first time after entering the energy-saving mode. It may be understood that the third indication information may be the location information of the terminal device. In other words, the third indication information and the location information of the terminal device may be a same piece of information, or the terminal device may include the location information of the terminal device in the registration request message to indicate the network device to update the satellite coverage information of the terminal device.

S704: The network device updates the satellite coverage information.

S704 is similar to S604 in the method 600. For brevity, details are not described herein again.

In the foregoing solution, the network device sends, to the terminal device, the energy-saving parameter used to enter the energy-saving mode, and the network device determines the energy-saving parameter based on the satellite coverage information of the terminal device. The network device enables, by using the energy-saving parameter, the terminal device to enter the energy-saving mode when the terminal device enters the non-coverage area of the satellite, to save resources of the terminal device. If the terminal device finds that the terminal device is still in the coverage area of the satellite at specific time after entering the energy-saving mode, it means that the terminal device enters the energy-saving mode in the coverage area of the satellite. This affects normal communication of the terminal device. In this case, the terminal device may initiate the registration procedure, so that the network device updates the satellite coverage information, and re-determines the energy-saving parameter based on the updated satellite coverage information. According to the foregoing solution, the network device is enabled to sense a change of a coverage status of the terminal device in time, to ensure that reachability of the terminal device is not affected, and improve communication efficiency.

It may be understood that the method 700 may be independently implemented, or may be implemented in combination with the method 600. For example, in a possible implementation, the network device may send both the satellite coverage information and the energy-saving parameter to the terminal device. After receiving the satellite coverage information and the energy-saving parameter from the network device, the terminal device determines whether the coverage status of the terminal device indicated by the satellite coverage information matches an actual satellite coverage status of the terminal device, and determines whether the terminal device is located in the coverage area of the satellite at the first time after entering the energy-saving mode. When the coverage status of the terminal device indicated by the satellite coverage information does not match the actual satellite coverage status of the terminal device, and/or when the terminal device is located in the coverage area of the satellite at the first time, the terminal device sends the registration request message to the network device.

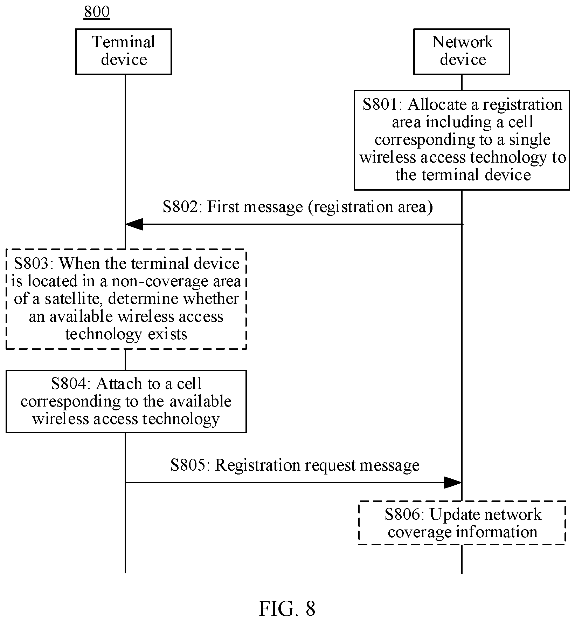

FIG. 8 is an example flowchart of a method 800 according to an embodiment of this application. In the method 800, a registration area allocated by a network device to a terminal device includes a cell corresponding to a single wireless access technology. When the terminal device is located in a non-coverage area of a satellite, the terminal device still determines, by cell scanning, whether an available wireless access technology exists. When the available wireless access technology exists, the terminal device attaches to a cell corresponding to the available wireless access technology, and triggers a registration procedure, to enable a network to sense a latest location of the terminal device, so that the network device updates network coverage information of the terminal device.

The following describes the method 800 by using an example with reference to each step in FIG. 8.

S801: The network device allocates, to the terminal device, the registration area including the cell corresponding to the single wireless access technology.

For example, when determining that the satellite accessed by the terminal device is a satellite providing discontinuous coverage, the network device allocates the registration area to the terminal device. The registration area includes only the cell corresponding to the single wireless access technology. In other words, the cell included in the registration area corresponds to a same wireless access technology, and the registration area does not include a cell supporting another wireless access technology. The wireless access technology includes different satellite access types such as NR (a low earth orbit (low earth orbit, LEO)), NR (a mid earth orbit (mid earth orbit, MEO)), and NR (a geostationary equatorial orbit (geostationary equatorial orbit, GEO)).

S802: The network device sends a first message to the terminal device, where the first message includes the registration area. Correspondingly, the terminal device receives the first message from the network device.

For example, after allocating the registration area to the terminal device, the network device sends the registration area to the terminal device by using the first message. In a possible implementation, the network device sends the first message to the terminal device via an access network device.

In an implementation, the network device may send the registration area to the terminal device in the registration procedure of the terminal device. For example, after receiving a registration request message from the terminal device, the network device determines whether the satellite accessed by the terminal device is the satellite providing discontinuous coverage. If the satellite accessed by the terminal device is the satellite providing discontinuous coverage, the network device performs S801, and then sends a registration response message to the terminal device, where the registration response message includes the registration area. In other words, in this scenario, the first message may be the registration response message.

In another implementation, the network device may generate the registration area based on configuration information, and send the registration area to the terminal device by using a non-access stratum message. In this implementation, a moment at which the network device sends satellite coverage information to the terminal device is not limited in this application.

Optionally, the first message may further include fifth indication information, and the fifth indication information indicates the terminal device to determine, when the terminal device is located in the non-coverage area of the satellite, whether the available wireless access technology exists.

Optionally, in S803, when the terminal device is located in a coverage area of the satellite, the terminal device determines whether the available wireless access technology exists.

For example, after entering the coverage area of the satellite, the terminal device determines, by cell scanning and based on the configuration information or the fifth indication information from the network device, whether the available wireless access technology exists. For example, the terminal device performs cell scanning based on a preconfiguration, or periodically performs cell scanning, or regularly performs cell scanning. A specific manner is not limited in this application.

S804: The terminal device attaches to the cell corresponding to the available wireless access technology.

For example, when the available wireless access technology exists, the terminal device attaches to the cell corresponding to the available wireless access technology. In other words, when the terminal device is located in the non-coverage area of the satellite, if the terminal device finds that the available wireless access technology exists, the terminal device switches from a cell corresponding to the satellite to the cell corresponding to the available wireless access technology.

S805: The terminal device sends the registration request message to the network device. Correspondingly, the network device receives the registration request message from the terminal device.

For example, after attaching to the available wireless access technology, the terminal device sends the registration request message to the network device. In a possible implementation, the terminal device sends the registration request message to the network device via the access network device.

It may be understood that, because the registration area allocated by the network device to the terminal device in S801 includes only the cell corresponding to the single wireless access technology, the cell corresponding to the satellite and the cell corresponding to the wireless access technology belong to different registration areas. Therefore, after switching from the cell corresponding to an original satellite access technology to the cell corresponding to the wireless access technology, the terminal device sends the registration request message to the network device to trigger a registration area update procedure.

It may be further understood that the registration request message may be a mobility registration update request message in 5G, or may be a tracking area update request message in 4G, or may be another message in a future network system. This is not limited in this application.

Optionally, the registration request message includes sixth indication information. The sixth indication information indicates the network device to update the network coverage information of the terminal device, and the network coverage information indicates time during which the terminal device is located in a coverage area of a network, or the network coverage information indicates time during which the terminal device is located in a non-coverage area of the network.

Optionally, the registration request message includes location information of the terminal device, and the location information is used by the network device to update the network coverage information of the terminal device, or the location information is used by the network device to track a location of the terminal device.

Optionally, in S806, the network device updates the network coverage information. A specific process is similar to S604 in the method 600. A difference lies in that the network device updates the satellite coverage information of the terminal device in S604, and the network device updates the network coverage information in S806. The network coverage information may be the satellite coverage information of the terminal device.

After updating the network coverage information of the terminal device, the network device may generate an energy-saving parameter based on the network coverage information.

In the foregoing solution, when the terminal device is located in the coverage area of the satellite, the terminal device still determines, by cell scanning, whether the available wireless access technology exists. When the available wireless access technology exists, the terminal device attaches to the cell corresponding to the available wireless access technology. Because the registration area allocated by the network device to the terminal device includes only the cell corresponding to the single wireless access technology, after attaching to the cell corresponding to the available wireless access technology, the terminal device needs to trigger the registration procedure, so that the network device updates the network coverage information of the terminal device in the registration procedure of the terminal device. According to the foregoing solution, the terminal device in the non-coverage area of the satellite is enabled to attach to a cell corresponding to another available wireless access technology, so that the terminal device can still perform communication in the non-coverage area of the satellite, to improve communication efficiency.

It may be understood that the method 800 may be independently implemented, or may be implemented in combination with the method 600 and/or the method 700. For example, in an implementation, the network device may send, to the terminal device by using a same non-access stratum message, the satellite coverage information, the energy-saving parameter, and the registration area including the cell corresponding to the single wireless access technology. After receiving the non-access stratum message from the network device, the terminal device may perform the method of S602 and S603 in the method 600, or perform the solution of S702 and S703 in the method 700, or perform the solution of S803 to S805 in the method 800.

FIG. 9 is an example flowchart of a method 900 according to an embodiment of this application. The method 900 may be a possible implementation of the method 600. In the method 900, an example in which a terminal device in the method 600 is UE and a network device in the method 600 is an AMF is used for description, and an example in which a registration request message in the method 600 is a registration update request message is used for description.

S901: The UE sends the registration request message to the AMF. Correspondingly, the AMF receives the registration request message from the UE.

S902: The AMF determines satellite coverage information of the UE.

For example, the AMF determines the satellite coverage information based on ephemeris information of a satellite and location information of the UE. For a specific implementation process and descriptions of the satellite coverage information, refer to related descriptions of S601 in the method 600. Details are not described herein again.

S903: The AMF sends a registration accept message to the UE, where the registration accept message includes the satellite coverage information. Correspondingly, the UE receives the registration accept message from the AMF.

It may be understood that S903 may be considered as a possible implementation of S601 in the method 600. Details are not described herein again.

Optionally, in S904, the UE determines whether a coverage status of the UE indicated by the satellite coverage information matches an actual satellite coverage status of the UE.

S905: The UE sends the registration update request message to the AMF. Correspondingly, the AMF receives the registration update request message from the UE.

S906: A network device updates the satellite coverage information.

For example, when determining that the coverage status of the UE indicated by the satellite coverage information does not match the actual satellite coverage status of the UE, the UE sends the registration update request message to the AMF. After receiving the registration update request message from the UE, the AMF updates the satellite coverage information of the UE. It may be understood that S904 to S906 are similar to S602 to S604 in the method 600. For brevity, details are not described herein again.

S907: The AMF sends a registration update accept message to the UE, where the registration update accept message carries updated satellite coverage information. Correspondingly, the UE receives the registration update accept message from the AMF. It may be understood that, after obtaining the updated satellite coverage information from the registration update accept message, the UE may perform step S904 again.

It may be understood that the method 900 is described by using an example in which the method in this embodiment of this application is applied to a 5G system. However, this embodiment may be further applied to another system. For example, when the method 900 is applied to a 4G system, the AMF in the method 900 may be replaced with an MME. The registration request message in S901 may be replaced with an attach request message or a tracking area update request message, and correspondingly, S903 may be replaced with an attach accept message or a tracking area update accept message. The registration update request message in S905 may be replaced with a tracking area update request message, and correspondingly, S907 may be replaced with a tracking area update accept message.

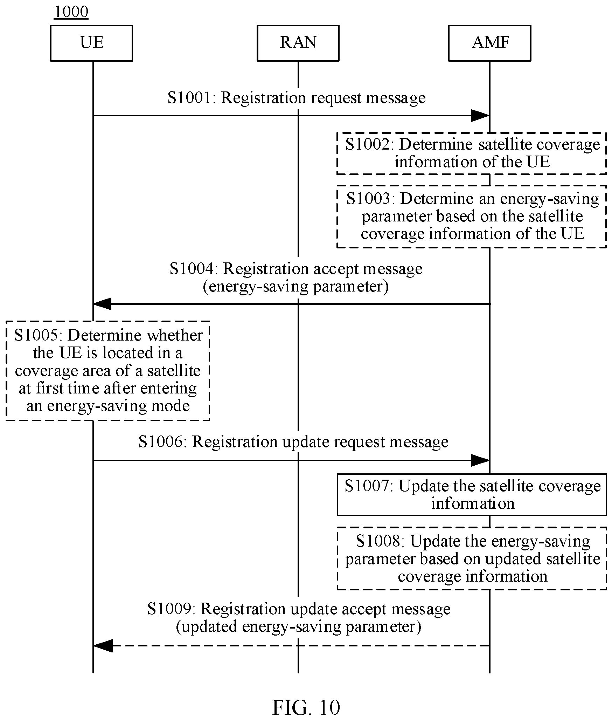

FIG. 10 is an example flowchart of a method 1000 according to an embodiment of this application. The method 1000 may be a possible implementation of the method 700. In the method 1000, an example in which a terminal device in the method 700 is UE and a network device in the method 700 is an AMF is used for description, and an example in which a registration request message in the method 700 is a registration update request message is used for description.

S1001: The UE sends the registration request message to the AMF. Correspondingly, the AMF receives the registration request message from the UE.

Optionally, in S1002, the AMF determines satellite coverage information of the UE.

Optionally, in S1003, the AMF determines an energy-saving parameter based on the satellite coverage information of the UE.

For example, after receiving the registration request message from the UE, the AMF determines the satellite coverage information based on location information of the UE and ephemeris information of a satellite, and then determines the energy-saving parameter based on the satellite coverage information. For a specific process, refer to descriptions of S701 in the method 700. Details are not described herein again.

S1004: The AMF sends a registration accept message to the UE, where the registration accept message includes the energy-saving parameter. Correspondingly, the UE receives the registration accept message from the AMF.

It may be understood that S1004 may be considered as a possible implementation of S701 in the method 700. Details are not described herein again.

S1005: The UE determines whether the UE is located in a coverage area of the satellite at first time after entering an energy-saving mode.

S1006: The UE sends the registration update request message to the AMF. Correspondingly, the AMF receives the registration update request message from the UE.

S1007: The AMF updates the satellite coverage information.

For example, when determining that the UE is located in the coverage area of the satellite at the first time, the UE sends the registration update request message to the AMF. After receiving the registration update request message from the UE, the AMF updates the satellite coverage information of the UE. It may be understood that S1005 to S1007 are similar to S702 to S704 in the method 700. For brevity, details are not described herein again.

Optionally, in S1008, the AMF updates the energy-saving parameter based on updated satellite coverage information.

Optionally, in S1009, the AMF sends a registration update accept message to the UE, where the registration update accept message includes the updated energy-saving parameter. Understandably, after obtaining the updated energy-saving parameter from the registration update accept message, the UE may perform S1005 again.

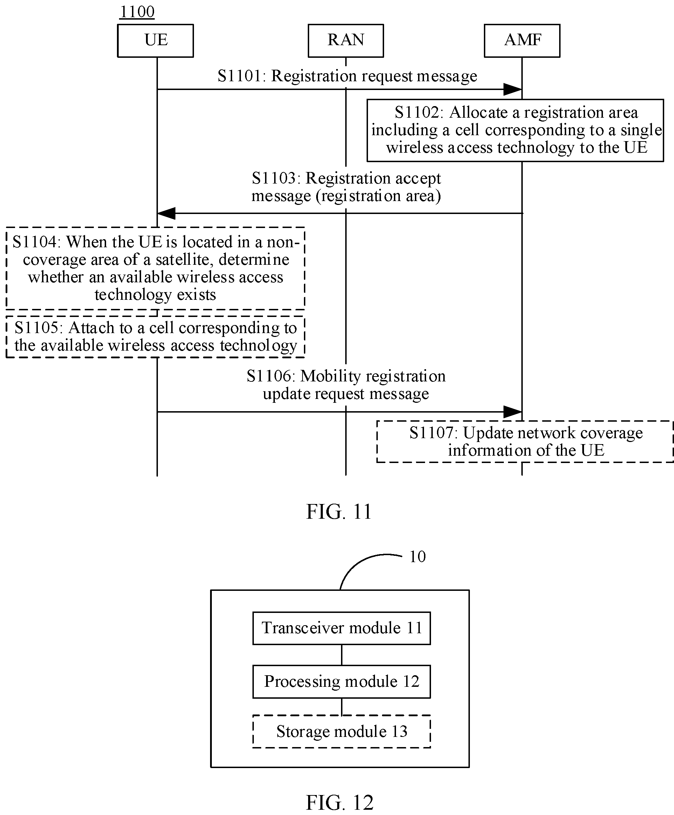

FIG. 11 is an example flowchart of a method 1100 according to an embodiment of this application. The method 1100 may be a possible implementation of the method 800. In the method 1100, an example in which a terminal device in the method 800 is UE and a network device in the method 800 is an AMF is used for description, and an example in which a first message in the method 800 is a registration accept message and a registration request message in the method 800 is a mobility registration update request message is used for description.

S1101: The UE sends the registration request message to the AMF. Correspondingly, the AMF receives the registration request message from the UE.

S1102: The AMF allocates, to the UE, a registration area including a cell corresponding to a single wireless access technology.

For example, after receiving the registration request message from the UE, the AMF allocates the registration area to the UE, where the cell included in the registration area corresponds to a same wireless access technology. For a specific solution, refer to descriptions of S801 in the method 800. Details are not described herein again.

S1103: The AMF sends the registration accept message to the UE, where the registration accept message includes the registration area. Correspondingly, the UE receives the registration accept message from the AMF.

It may be understood that S1103 may be considered as a possible implementation of S802 in the method 800. Details are not described herein again.

Optionally, in S1104, when the UE is located in a coverage area of a satellite, the UE determines whether an available wireless access technology exists.

Optionally, in S1105, the UE attaches to a cell corresponding to the available wireless access technology.

S1106: The UE sends the mobility registration update request message to the AMF. Correspondingly, the AMF receives the mobility registration update request message from the UE.

Optionally, in S1107, the AMF updates network coverage information of the UE.

S1104 to S1107 are similar to S803 to S806 in the method 800. For brevity, details are not described herein again.

Corresponding to the method provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that technical features described in the foregoing method embodiments are also applicable to the following apparatus embodiments. Therefore, for content that is not described in detail, refer to the foregoing method embodiments. For brevity, details are not described herein again.

FIG. 12 is a block schematic of a communication apparatus 10 according to an embodiment of this application. The apparatus 10 includes a transceiver module 11 and/or a processing module 12. The transceiver module 11 may implement a corresponding communication function. The processing module 12 is configured to perform data processing. To be specific, the transceiver module 11 is configured to perform receiving and sending-related operations. The processing module 12 is configured to perform other operations other than receiving and sending. The transceiver module 11 may also be referred to as a communication interface or a communication unit.

Optionally, the apparatus 10 may further include a storage module 13. The storage module 13 may be configured to store instructions and/or data, and the processing module 12 may read the instructions and/or the data in the storage module, so that the apparatus implements actions of a device or a network element in the foregoing method embodiments.

In a first design, the apparatus 10 may correspond to a terminal device (for example, a terminal device in FIG. 6 to FIG. 8, or UE in FIG. 9 to FIG. 11) in the foregoing method embodiments, or may be a component (for example, a chip) of the terminal device.

The apparatus 10 may implement steps or procedures performed by the terminal device corresponding to the foregoing method embodiments. The transceiver module 11 may be configured to perform receiving and sending-related operations of the terminal device in the foregoing method embodiments, and the processing module 12 may be configured to perform processing-related operations of the terminal device in the foregoing method embodiments.

In a possible implementation, the transceiver module 11 is configured to receive satellite coverage information from a network device, where the satellite coverage information indicates time during which the apparatus is located in a coverage area of a satellite. The transceiver module 11 is further configured to send a registration request message to the network device when a coverage status of the apparatus indicated by the satellite coverage information does not match an actual satellite coverage status of the apparatus.

In another possible implementation, the apparatus 10 may implement steps or procedures performed by a terminal device in the method 600 in the foregoing method embodiment or UE in the method 900 in the foregoing method embodiment. The transceiver module 11 is configured to receive an energy-saving parameter from a network device, where the energy-saving parameter is used by the apparatus to enter an energy-saving mode. The transceiver module 11 is further configured to send a registration request message to the network device when the apparatus is located in a coverage area of a satellite at a first time after the apparatus enters the energy-saving mode.

In still another possible implementation, the apparatus 10 may implement steps or procedures performed by a terminal device in the method 700 in the foregoing method embodiments or UE in the method 1000 in the foregoing method embodiments. The processing module 12 is configured to: when the apparatus 10 is located in a non-coverage area of a satellite, determine whether an available wireless access technology exists; and when the available wireless access technology exists, attach to a cell corresponding to the available wireless access technology. The transceiver module 11 is configured to send a registration request message to the network device.

In still another possible implementation, the apparatus 10 may implement steps or procedures performed by a terminal device in the method 800 in the foregoing method embodiment or UE in the method 1100 in the foregoing method embodiment. The processing module 12 is configured to: when a satellite accessed by the terminal device is a satellite providing discontinuous coverage, allocate a registration area including a cell of a single wireless access technology to the terminal device. The transceiver module 11 is configured to send a first message to the terminal device, where the first message includes the registration area.

In a second design, the apparatus 10 may correspond to a network device (for example, a network device in FIG. 6 to FIG. 8, or an AMF in FIG. 9 to FIG. 11) in the foregoing method embodiments, or may be a component (for example, a chip) of the network device.

The apparatus 10 may implement steps or procedures performed by the network device corresponding to the foregoing method embodiments. The transceiver module 11 may be configured to perform receiving and sending-related operations of the network device in the foregoing method embodiments, and the processing module 12 may be configured to perform processing-related operations of the network device in the foregoing method embodiments.

In a possible implementation, the apparatus 10 may implement steps or procedures performed by a network device in the method 800 in the foregoing method embodiments or an AMF in the method 1100. The transceiver module 11 is configured to send satellite coverage information to a terminal device, where the satellite coverage information indicates time during which the terminal device is located in a coverage area of a satellite and/or time during which the terminal device is located in a non-coverage area of the satellite. The transceiver module 11 is further configured to receive a registration request message from the terminal device, where the registration request message is triggered based on the satellite coverage information. The processing module 12 is configured to update the satellite coverage information based on the registration request message.

It should be understood that a specific process in which the modules perform the foregoing corresponding steps is described in detail in the foregoing method embodiments. For brevity, details are not described herein again.

It should be further understood that the apparatus 10 herein is embodied in a form of a functional module. The term "module" herein may be an application-specific integrated circuit (application-specific integrated circuit, ASIC), an electronic circuit, a processor (such as a shared processor, a dedicated processor, or a group processor) configured to execute one or more software or firmware programs, a memory, a combinational logic circuit, and/or another suitable component that supports the described function. In an optional example, a person skilled in the art may understand that the apparatus 10 may be specifically the terminal device in the foregoing embodiments, and may be configured to perform procedures and/or steps corresponding to the terminal device in the foregoing method embodiments; or the apparatus 10 may be specifically the network device in the foregoing embodiments, and may be configured to perform procedures and/or steps corresponding to the network device in the foregoing method embodiments. To avoid repetition, details are not described herein again.

The apparatus 10 in each of the foregoing solutions has a function of implementing corresponding steps performed by a device (like a terminal device or a network device) in the foregoing method. The function may be implemented by hardware, or may be implemented by hardware executing corresponding software. The hardware or software includes one or more modules corresponding to the foregoing functions. For example, the transceiver module may be replaced with a transceiver machine (for example, a sending unit in the transceiver module may be replaced with a transmitter machine, and a receiving unit in the transceiver module may be replaced with a receiver machine), and another unit like a processing module may be replaced with a processor, to separately perform a receiving and sending operation and a related processing operation in each method embodiment.

In addition, the transceiver module 11 may be a transceiver circuit (for example, may include a receiver circuit and a transmitter circuit), and the processing module may be a processing circuit.

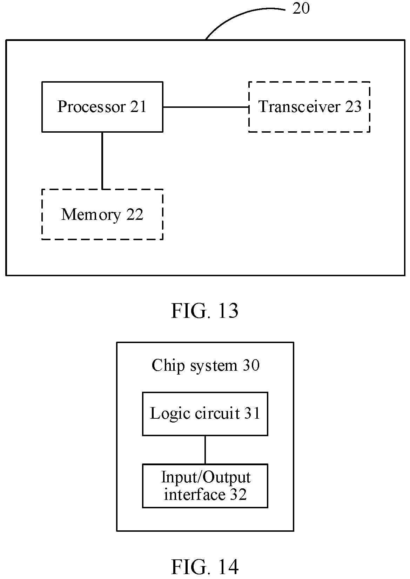

FIG. 13 is a schematic of another communication apparatus 20 according to an embodiment of this application. The apparatus 20 includes a processor 21. The processor 21 is configured to execute a computer program or instructions stored in a memory 22, or read data/signaling stored in the memory 22, to perform the method in the foregoing method embodiments. Optionally, there are one or more processors 21.

Optionally, as shown in FIG. 13, the apparatus 20 further includes the memory 22, and the memory 22 is configured to store the computer program or the instructions and/or the data. The memory 22 may be integrated with the processor 21, or may be disposed separately. Optionally, there are one or more memories 22.

Optionally, as shown in FIG. 13, the apparatus 20 further includes a transceiver 23, and the transceiver 23 is configured to receive and/or send a signal. For example, the processor 21 is configured to control the transceiver 23 to receive and/or send a signal.

In a solution, the apparatus 20 is configured to implement operations performed by a terminal device in the foregoing method embodiments.

In another solution, the apparatus 20 is configured to implement operations performed by a network device in the foregoing method embodiments.

It should be understood that, the processor in this embodiment of this application may be a central processing unit (central processing unit, CPU), or may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or transistor logic device, or a discrete hardware component, a memory (storage module) may be integrated into the processor.

It should further be noted that the memory described herein is intended to include, but is not limited to, these and any other suitable type of memory.

FIG. 14 is a schematic of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled to a storage unit, and invoke instructions in the storage unit, so that the chip system 30 can implement the method and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement operations performed by a network functions virtualization orchestrator in the foregoing method embodiments.

For example, the logic circuit 31 is configured to implement processing-related operations performed by a terminal device in the foregoing method embodiments, for example, processing-related operations performed by a terminal device in the embodiments shown in FIG. 6 to FIG. 8 or UE in FIG. 9 to FIG. 11. The input/output interface 32 is configured to implement sending and/or receiving-related operations performed by the terminal device in the foregoing method embodiments, for example, sending and/or receiving-related operations performed by the terminal device in the embodiments shown in FIG. 6 to FIG. 8 or the UE in FIG. 9 to FIG. 11.

In another solution, the chip system 30 is configured to implement operations performed by a network device in the foregoing method embodiments.

For example, the logic circuit 31 is configured to implement processing-related operations performed by the network device in the foregoing method embodiments, for example, processing-related operations performed by a network device in the embodiments shown in FIG. 6 to FIG. 8 or an AMF in FIG. 9 to FIG. 11. The input/output interface 32 is configured to implement sending and/or receiving-related operations performed by a virtualized infrastructure manager in the foregoing method embodiments, for example, sending and/or receiving-related operations performed by the network device in the embodiments shown in FIG. 6 to FIG. 8 or the AMF in FIG. 9 to FIG. 11.

An embodiment of this application further provides a computer-readable storage medium, where the computer-readable storage medium stores computer instructions used to implement the method performed by a device in the foregoing method embodiments.

For example, when the computer program is executed by a computer, the computer is enabled to implement the method performed by the terminal device in the foregoing method embodiments.

For another example, when the computer program is executed by a computer, the computer is enabled to implement the method performed by the network device in the foregoing method embodiments.

An embodiment of this application further provides a computer program product, including instructions. When the instructions are executed by a computer, the method performed by the device (for example, the terminal device, or for another example, the network device) in the foregoing method embodiments is implemented.

An embodiment of this application further provides a communication system, including the foregoing terminal device and the foregoing network device.

For explanations and beneficial effect of related content of any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a terminal device, satellite coverage information from a network device, wherein the satellite coverage information indicates time during which the terminal device is located in a coverage area of a satellite; and
when a coverage status of the terminal device indicated by the satellite coverage information does not match an actual satellite coverage status of the terminal device, sending, by the terminal device, a registration request message to the network device.

2. The method according to claim 1, wherein the registration request message comprises location information of the terminal device, and the location information is used to update the satellite coverage information.

3. The method according to claim 1 or 2, wherein the registration request message comprises first indication information, and the first indication information indicates the network device to update the satellite coverage information.

4. The method according to any one of claims 1 to 3, wherein the method further comprises:
determining, by the terminal device, that the coverage status of the terminal device indicated by the satellite coverage information does not match the actual satellite coverage status of the terminal device, wherein the determining, by the terminal device, that the coverage status of the terminal device indicated by the satellite coverage information does not match the actual satellite coverage status of the terminal device specifically comprises:
determining, by the terminal device, that the satellite coverage information indicates that the terminal device is currently located in a non-coverage area of the satellite, and the terminal device is currently actually located in the coverage area of the satellite.

5. The method according to any one of claims 1 to 4, wherein the method further comprises:
determining, by the terminal device, the actual satellite coverage status of the terminal device, wherein the determining, by the terminal device, the actual satellite coverage status of the terminal device specifically comprises: determining, by the terminal device, the actual satellite coverage status of the terminal device based on signal strength of a current cell; or
determining, by the terminal device, an actual satellite coverage situation of the terminal device based on ephemeris information of the satellite and the location information of the terminal device.

6. The method according to any one of claims 1 to 5, wherein the method further comprises:
receiving, by the terminal device, second indication information from the network device; and
determining, by the terminal device based on the second indication information, whether the coverage status of the terminal device indicated by the satellite coverage information matches the actual satellite coverage status of the terminal device.

7. A communication method, comprising:
sending, by a network device, satellite coverage information to a terminal device, wherein the satellite coverage information indicates time during which the terminal device is located in a coverage area of a satellite;
receiving, by the network device, a registration request message from the terminal device, wherein the registration request message is triggered based on the satellite coverage information; and
updating, by the network device, the satellite coverage information based on the registration request message.

8. The method according to claim 7, wherein the registration request message comprises location information of the terminal device; and
the updating, by the network device, the satellite coverage information based on the registration request message comprises:
updating, by the network device, the satellite coverage information based on the registration request message by using the location information of the terminal device.

9. The method according to claim 7 or 8, wherein the updating, by the network device, the satellite coverage information based on the registration request message comprises:
updating, by the network device, the satellite coverage information based on that the satellite accessed by the terminal device is a satellite providing discontinuous coverage.

10. The method according to any one of claims 7 to 9, wherein the registration request message comprises first indication information, and the first indication information indicates the network device to update the satellite coverage information.

11. The method of any one of claims 7 to 10, wherein the method further comprises:
sending, by the network device, second indication information to the terminal device, wherein the second indication information indicates the terminal device to notify the network device when a coverage status of the terminal device indicated by the satellite coverage information does not match an actual satellite coverage status of the terminal device.

12. A communication apparatus, comprising:
a transceiver module, configured to receive satellite coverage information from a network device, wherein the satellite coverage information indicates time during which a terminal device is located in a coverage area of a satellite, wherein
the transceiver module is further configured to send, when a coverage status of the terminal device indicated by the satellite coverage information does not match an actual satellite coverage status of the terminal device, a registration request message to the network device.

13. The apparatus according to claim 12, wherein the registration request message comprises location information of the apparatus, and the location information is used to update the satellite coverage information.

14. The apparatus according to claim 12 or 13, wherein the registration request message comprises first indication information, and the first indication information indicates the network device to update the satellite coverage information.

15. The apparatus according to any one of claims 12 to 14, wherein the apparatus further comprises:
a processing module, configured to determine that the coverage status of the terminal device indicated by the satellite coverage information does not match the actual satellite coverage status of the terminal device, wherein the processing module is specifically configured to:
determine that the satellite coverage information indicates that the terminal device is currently located in a non-coverage area of the satellite, and the terminal device is currently actually located in the coverage area of the satellite.

16. The apparatus according to any one of claims 12 to 15, wherein the processing module is further configured to:
determine the actual satellite coverage status of the terminal device, wherein
the processing module is specifically configured to: determine the actual satellite coverage status of the terminal device based on signal strength of a current cell; or determine an actual satellite coverage situation of the terminal device based on ephemeris information of the satellite and the location information of the terminal device.

17. The apparatus according to any one of claims 12 to 16, wherein
the transceiver module is further configured to receive second indication information from the network device; and
the processing module is further configured to determine, based on the second indication information, whether the coverage status of the terminal device indicated by the satellite coverage information matches the actual satellite coverage status of the terminal device.

18. A communication apparatus, comprising:
a transceiver module, configured to send satellite coverage information to a terminal device, wherein the satellite coverage information indicates time during which the terminal device is located in a coverage area of a satellite, wherein
the transceiver module is further configured to receive a registration request message from the terminal device, wherein the registration request message is triggered based on the satellite coverage information; and
a processing module, configured to update the satellite coverage information based on the registration request message.

19. The apparatus according to claim 18, wherein the registration request message comprises location information of the terminal device; and
the processing module is specifically configured to: update the satellite coverage information based on the registration request message by using the location information of the terminal device.

20. The apparatus according to claim 18 or 19, wherein the processing module is specifically configured to: update the satellite coverage information based on that the satellite accessed by the terminal device is a satellite providing discontinuous coverage.

21. The apparatus according to any one of claims 18 to 20, wherein the registration request message comprises first indication information, and the first indication information indicates the apparatus to update the satellite coverage information.

22. The apparatus according to any one of claims 18 to 21, wherein the transceiver module is further configured to send second indication information to the terminal device, and the second indication information indicates the terminal device to notify the apparatus when a coverage status of the terminal device indicated by the satellite coverage information does not match an actual satellite coverage status of the terminal device.

23. A computer-readable storage medium, wherein the computer-readable storage medium stores a computer program, and when the computer program is run on a computer, the computer is enabled to perform the method according to any one of claims 1 to 6, or the computer is enabled to perform the method according to any one of claims 7 to 11.

24. A computer program product, wherein the computer program product comprises instructions used to perform the method according to any one of claims 1 to 6, or the computer program product comprises instructions used to perform the method according to any one of claims 7 to 11.

25. A chip, wherein the chip comprises a processor and a communication interface, the communication interface is configured to receive a signal, and transmit the signal to the processor, and the processor processes the signal, to enable the method according to any one of claims 1 to 6 to be performed, or the method according to any one of claims 7 to 11 to be performed.

26. A communication apparatus, comprising:
a memory, configured to store a program; and
a processor, configured to execute the program stored in the memory, wherein when the program stored in the memory is executed, the processor is configured to perform the method according to any one of claims 1 to 6, or the processor is configured to perform the method according to any one of claims 7 to 11.

27. A communication system, comprising a terminal device and a network device, wherein
the terminal device is configured to perform the method according to any one of claims 1 to 6; and
the network device is configured to perform the method according to any one of claims 7 to 11.
